# EUROPEAN PATENT SPECIFICATION

(11) **EP 3 974 130 B1**
(45) Date of publication and mention of the grant of the patent: **06.05.2026**
(21) Application number: 21198238.4
(22) Date of filing: 22.09.2021
(51) Int. Cl.: B26D 5/00, G06Q 10/04, B26F 1/02, G05B 19/4097, B26D 9/00, G05B 19/418, B65H 3/08, B65H 35/02, B65H 35/04

(54) **MACHINING DATA GENERATING APPARATUS AND SHEET PROCESSING SYSTEM**
VORRICHTUNG ZUR ERZEUGUNG VON BEARBEITUNGSDATEN UND BOGENBEARBEITUNGSSYSTEM
APPAREIL DE GÉNÉRATION DE DONNÉES D'USINAGE ET SYSTÈME DE TRAITEMENT DES FEUILLES

(30) Priority: 23.09.2020 JP 2020158575; 28.04.2021 JP 2021076168
(43) Date of publication of application: 30.03.2022
(73) Proprietor: Duplo Seiko Corporation, Kinokawa-shi, Wakayama 649-6551 (JP)
(72) Inventor: YAMADA, Kenta, Kinokawa-shi, 649-6551 (JP); KANAOKA, Hiromichi, Kinokawa-shi, 649-6551 (JP)
(74) Representative: Mewburn Ellis LLP

(56) References cited:
- EP-A1- 2 848 564
- WO-A2-2014/132214
- GB-A- 2 491 080
- JP-A- 2018 130 790
- JP-A- 2020 026 006
- US-A1- 2001 000 222
- US-A1- 2006 079 987

## Description

### BACKGROUND OF THE INVENTION

### [Technical Field]

The present invention relates to a machining data generation apparatus that generates machining data for causing one or more sheet process apparatuses to execute a plurality of times of processes, and a sheet process system including the machining data generation apparatus.

### [Background Art]

For example, in order to obtain a large number of products from one sheet, there is a case where machining is executed once on the sheet in a first sheet process apparatus and machining is executed many times in a second sheet process apparatus.

From JP2011 201646 there is known a sheet process system comprising several sheet process apparatus.

### [Prior Art Reference]

### (Patent Document)

| | |
|---|---|
| [Patent Document 1] | JP2011-201646A. |

### SUMMARY OF THE INVENTION

### [Problem to be Solved by the Invention]

In the above case, a user creates the machining data by setting a machining condition for the first sheet process apparatus, and creates the machining data by setting a machining condition for the second sheet process apparatus. Therefore, it is troublesome to create machining data for both apparatuses.

An object of the present invention is to provide a machining data generation apparatus that enables a user to easily create machining data even in the above-described case.

### [Means for Solving the Problem]

This problem is solved with the sheet processing system as defined in the independent claims. Further embodiments are defined in the dependent claims.

### [Effect of the Invention]

With the system of the present invention, in a case where one or a large number of products are obtained from a sheet by using one or more sheet process apparatuses, a user can easily create the machining data.

With the system of the present invention, the user can easily obtain a product in the system that obtains one or a large number of products from a sheet by using one or more sheet process apparatuses.

### BRIEF DESCRIPTION OF THE DRAWINGS

Fig. 1 is a diagram illustrating a sheet to be processed and a product to be obtained in a first embodiment;
Fig. 2 is a schematic plan view illustrating a sheet process system of the first embodiment;
Fig. 3 is a block diagram illustrating a configuration of a machining data generation apparatus;
Fig. 4 is a diagram illustrating six candidates of arrangement layouts;
Fig. 5 is a diagram illustrating products with different arrangement directions;
Fig. 6 is a diagram illustrating a process of candidate;
Fig. 7 is a diagram illustrating a process of candidate;
Fig. 8 is a diagram illustrating a process of candidate;
Fig. 9 is a block diagram illustrating a configuration of a machining data generation apparatus of a second embodiment;
Fig. 10 is a schematic plan view illustrating a sheet process system of a third embodiment;
Fig. 11 is a diagram illustrating a sheet to be processed and a product to be obtained in a fourth embodiment;
Fig. 12 is a schematic plan view illustrating a sheet process system of the fourth embodiment;
Fig. 13 is a diagram illustrating a selected arrangement layout;
Fig. 14 is a diagram illustrating a first-time process;
Fig. 15 is a diagram illustrating a second-time process;
Fig. 16 is a diagram illustrating a sheet to be processed and a product to be obtained in a fifth embodiment;
Fig. 17 is a diagram illustrating a selected arrangement layout;
Fig. 18 is a diagram illustrating a first-time process;
Fig. 19 is a diagram illustrating a second-time process;
Fig. 20 is a diagram illustrating a sheet to be processed and a product to be obtained in a sixth embodiment;
Fig. 21 is a schematic plan view illustrating a sheet process system of the sixth embodiment;
Fig. 22 is a diagram illustrating a selected arrangement layout;
Fig. 23 is a diagram illustrating a first-time process;
Fig. 24 is a diagram illustrating a second-time process;
Fig. 25 is a diagram illustrating a sheet to be processed and a machined product obtained by bending an obtained product in a seventh embodiment;
Fig. 26 is a diagram illustrating a product in the seventh embodiment;
Fig. 27 is a schematic plan view illustrating a sheet process system of the seventh embodiment;
Fig. 28 is a block diagram illustrating a configuration of a machining data generation apparatus of the seventh embodiment;
Fig. 29 is a diagram illustrating a first-time process;
Fig. 30 is a diagram illustrating a second-time process;
Fig. 31 is a block diagram illustrating a configuration of a sheet process apparatus of another embodiment;
Fig. 32 is a flowchart illustrating an example of an operation of the sheet process apparatus of Fig. 31;
Fig. 33 is a flowchart illustrating another example of the operation of the sheet process apparatus of Fig. 31;
Fig. 34 is a flowchart illustrating still another example of the operation of the sheet process apparatus of Fig. 31;
Fig. 35 is a schematic sectional view illustrating a right angle transfer apparatus in another embodiment;
Fig. 36 is a partially enlarged view of Fig. 35; and
**Fig.** 37 is a perspective view seen from arrow XXXVII of Fig. 36.

### DETAILED DESCRIPTION

### [Basic Form]

A sheet process system of the present invention executes a plurality of times of processes by using one or more sheet process apparatuses each of which processes a sheet by performing machining one or more times, and obtains a product in a desired form from the sheet. A machining data generation apparatus of the present invention is used in such a sheet process system, and generates machining data for operating the sheet process apparatus.

A machining data generation apparatus includes a machining condition input unit that inputs a machining condition for obtaining a product in a desired form from a sheet, a data generation unit that generates machining data including machining data pieces for operating the sheet process apparatus to execute each process in a plurality of times of processes on the basis of the input machining condition, and a data output unit that outputs the generated machining data to the sheet process apparatus that executes each process.

In a case where the sheet process system uses two or more sheet process apparatuses, the data output unit outputs each machining data piece to each of the sheet process apparatuses. On the other hand, in a case where the sheet process system uses only one sheet process apparatus, the data output unit continuously outputs each machining data piece to the sheet process apparatus.

In a case where the sheet process system obtains a plurality of products from a sheet, the data generation unit includes a layout setting unit that sets an arrangement layout of products in the sheet, which is realizable by a plurality of times of processes, on the basis of the size of the sheet and the size of the product or on the basis of the size of the sheet, the size of the product, and the type of machining, which are included in the input machining condition, and generates machining data on the basis of the set arrangement layout.

In a case where the arrangement layout is automatically set, the layout setting unit includes a candidate creation unit that creates a plurality of candidates for the arrangement layout, and a candidate selection unit that selects a specific candidate from the plurality of created candidates on the basis of a predetermined criterion, and the machining data generation apparatus further includes a criterion input unit that inputs the predetermined criterion. On the other hand, in a case where the user sets the arrangement layout, the layout setting unit includes a candidate creation unit that creates a plurality of candidates for the arrangement layout, and a candidate display unit that displays the plurality of created candidates, and the machining data generation apparatus further includes a candidate selection input unit by which a user selects a desired candidate from among the plurality of displayed candidates.

The candidate creation unit of the layout setting unit also creates a candidate in which at least a part of the products is rotated by 90 degrees such that the number of impositions per sheet is increased or such that the number of times of machining per sheet along a direction orthogonal to the transfer direction of the sheet is reduced.

The criterion input unit can input a predetermined criterion indicating that the number of impositions per sheet is maximum. Alternatively, the criterion input unit can input a predetermined criterion indicating that the process time per product is minimum.

The candidate creation unit creates the arrangement layout that is realizable by the final-time process in the plurality of times of processes and then creates the arrangement layout that is realizable by including the previous-time process, and the data generation unit generates the machining data indicating that the final-time process includes cutting machining of finish-cutting the sheet into the product.

It is preferable that in a case where at least any one of following (a) and (b) is satisfied,
(a) in a case where, in the sheet process apparatus that executes the N-th-time process, a size of the supplied sheet is larger than a size of the dischargeable sheet,
(b) in a case where a size of the sheet supplied to the sheet process apparatus that executes the N-th-time process is larger than a size of the sheet suppliable to the sheet process apparatus that executes the N+1-th-time process,
the N-th-time process (N is an integer of 1 or more) in the plurality of times of processes includes cutting machining of cutting the sheet.

The machining data generation apparatus described above may be used in a sheet process system that obtains one product from the sheet.

### [First Embodiment]

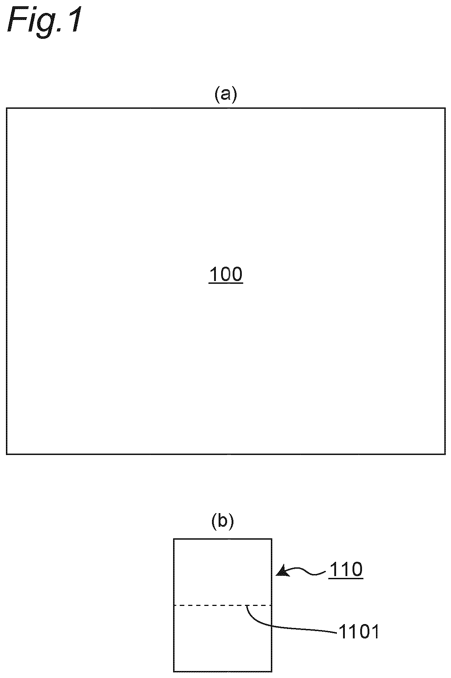

In the present embodiment, a case will be described in which a sheet process system forms a large number of products 110 having a size of 140.0 mm × 200.0 mm illustrated in (b) of Fig. 1, from one sheet 100 having a B2 size illustrated in (a) of Fig. 1. The product 110 has a perforation 1101 at the center in a longitudinal direction. Note that the sheet 100 and the product 110 are merely examples.

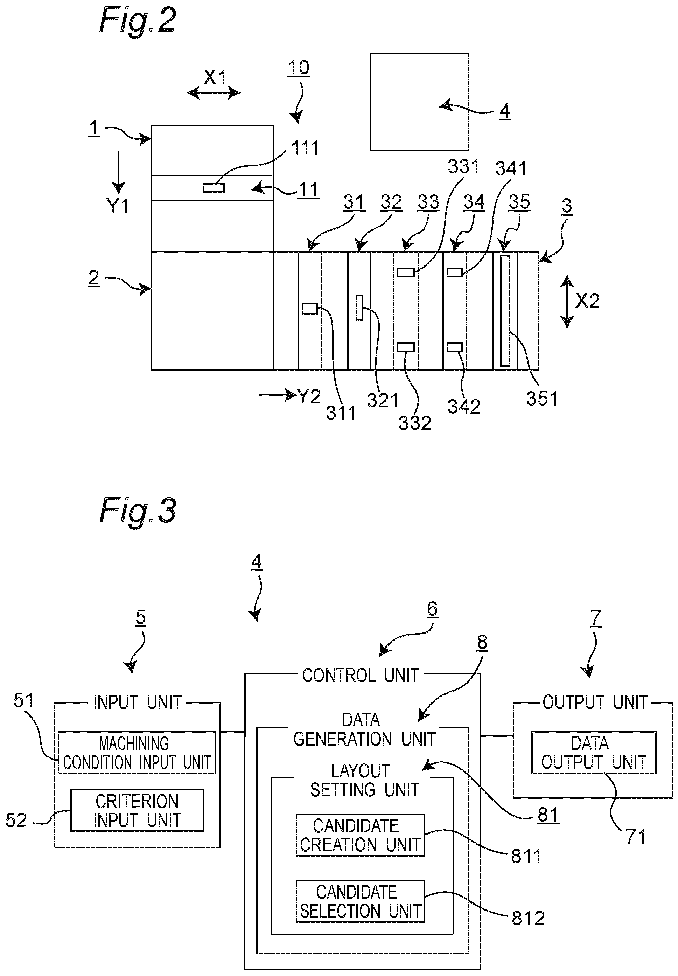

Fig. 2 is a schematic plan view illustrating the sheet process system of the present embodiment. A sheet process system 10 includes a first sheet process apparatus 1, a right angle transfer apparatus 2, a second sheet process apparatus 3, and a machining data generation apparatus 4. In the present embodiment, the size (B2 in this case) of the sheet supplied to the first sheet process apparatus 1 is larger than the size of the sheet suppliable to the second sheet process apparatus 3.

The first sheet process apparatus 1 includes one machining device 11, and machines the sheet 100 by the machining device 11 to feed the sheet in a transfer direction Y1. The machining device 11 moves a round blade 111 in a width direction X1 orthogonal to the transfer direction Y1 to cut the sheet 100 along the width direction X1. The sheet 100 is machined by the machining device 11 to be two sheet pieces.

The right angle transfer apparatus 2 transfers a sheet piece 101, which has been fed in the transfer direction Y1 from the first sheet process apparatus 1, in a transfer direction Y2 orthogonal to the transfer direction Y1.

The second sheet process apparatus 3 includes machining devices 31, 32, 33, 34, and 35. The machining device 31 includes one perforation forming blade 311, and forms a perforation along the transfer direction Y2 at an arbitrary position in a width direction X2 orthogonal to the transfer direction Y2 of the sheet piece 101. The machining device 32 includes one perforation forming blade 321, and forms a perforation along the width direction X2 on the sheet piece 101. The machining device 33 includes two slitters 331 and 332, and cuts arbitrary two portions of the sheet piece 101 in the width direction X2 along the transfer direction Y2. The machining device 34 includes two slitters 341 and 342, and cuts arbitrary two portions of the sheet piece 101 in the width direction X2 along the transfer direction Y2. The machining device 35 includes a guillotine blade 351 disposed along the width direction X2, and cuts the sheet piece 101 along the width direction X2.

### (Machining Data Generation Apparatus)

As illustrated in Fig. 3, the machining data generation apparatus 4 includes an input unit 5, a control unit 6, and an output unit 7. As the machining data generation apparatus 4, a notebook, desktop, or tablet computer, a smartphone, or another information terminal can be adopted. As the input unit 5, a touch panel, a keyboard, a mouse, or another pointing device can be adopted. The control unit 6 is realized by a CPU, a ROM, a RAM, and the like. The output unit 7 has a wired or wireless transmission function. On the other hand, the first sheet process apparatus 1 and the second sheet process apparatus 3 include a reception unit (not illustrated) that receives an output from the output unit 7.

The input unit 5 includes a machining condition input unit 51. The machining condition input unit 51 can input machining conditions for obtaining a large number of products 110 from the sheet 100. Specifically, the machining conditions include the size of the sheet 100, the size of the product 110, and the type of machining in the first sheet process apparatus 1 and the second sheet process apparatus 3.

The control unit 6 controls the operation of the machining data generation apparatus 4. The control unit 6 includes a data generation unit 8, the data generation unit 8 includes a layout setting unit 81, and the layout setting unit 81 includes a candidate creation unit 811 and a candidate selection unit 812.

The input unit 5 also includes a criterion input unit 52 that inputs a predetermined criterion required by the candidate selection unit 812. As the predetermined criterion, it is possible to adopt that the number of impositions per sheet is maximum or that the process time per product is minimum.

The output unit 7 includes a data output unit 71. The data output unit 71 outputs the machining data generated by the data generation unit 8 to the first sheet process apparatus 1 and the second sheet process apparatus 3. Since the machining data generated by the data generation unit 8 includes machining data piece for the first sheet process apparatus 1 and machining data piece for the second sheet process apparatus 3, the data output unit 71 outputs the machining data piece for the first sheet process apparatus 1 to the first sheet process apparatus 1, and outputs the machining data piece for the second sheet process apparatus 3 to the second sheet process apparatus 3.

### (Operation of Machining Data Generation Apparatus)

(1) First, a user inputs a machining condition through the machining condition input unit 51. This machining conditions include that the sheet 100 has a B2 size, that the product 110 has a size of 140.0 mm × 200.0 mm and has the perforation 1101 at the center in the longitudinal direction, and that the first sheet process apparatus 1 has the machining device 11 and the second sheet process apparatus 3 has the machining devices 31, 32, 33, 34, and 35. Further, the user inputs the predetermined criterion through the criterion input unit 52.

Note that the machining data generation apparatus 4 only needs to be able to recognize what kind of machining device the first sheet process apparatus 1 and the second sheet process apparatus 3 have, and the recognition method is not limited to the input from the machining condition input unit 51 by the user. For example, the following recognition method can be adopted.
(i) Information on the machining device included in each sheet process apparatus is stored in advance in the control unit 6, and the stored information on the machining device is read out.
(ii) A reception unit (not illustrated) of the machining data generation apparatus 4 and a transmission unit (not illustrated) of each sheet process apparatus are connected in a wired or wireless manner, and information on the machining device included in each sheet process apparatus is received from each sheet process apparatus.
(iii) The input from the machining condition input unit 51 by the user and another recognition method are combined.

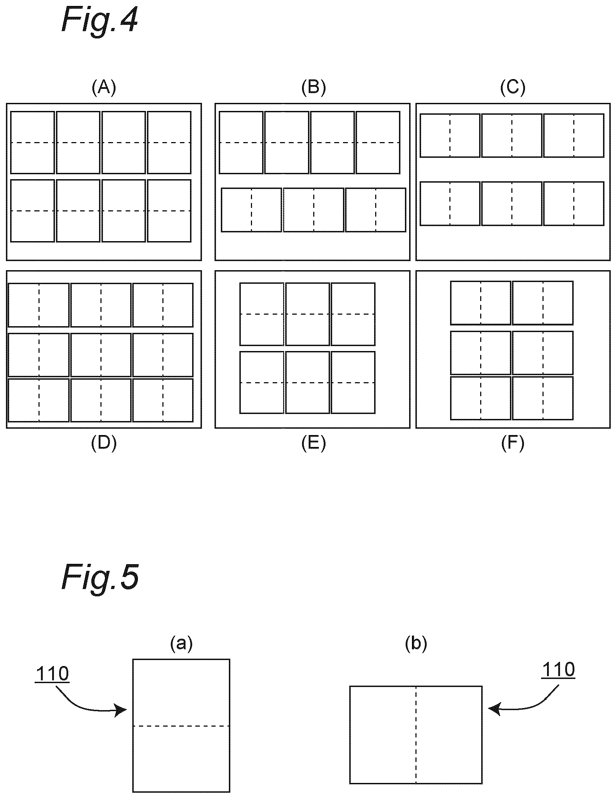

(2) When the machining conditions are input, the candidate creation unit 811 of the layout setting unit 81 creates six candidates A to F as illustrated in Fig. 4.

Note that the candidate creation unit 811 creates candidates after extracting arrangeable orientations of the product 110 with respect to the sheet 100 as illustrated in Fig. 5, on the basis of the input machining conditions. (a) of Fig. 5 illustrates a case where the product 110 is arranged at 0 degrees with respect to the sheet 100, and (b) of Fig. 5 illustrates a case where the product 110 is arranged by being rotated by 90 degrees with respect to the sheet 100. In the present embodiment, since the arrangement of (b) of Fig. 5 is also possible, the candidates B, C, D, and F also include the arrangement of (b) of Fig. 5.

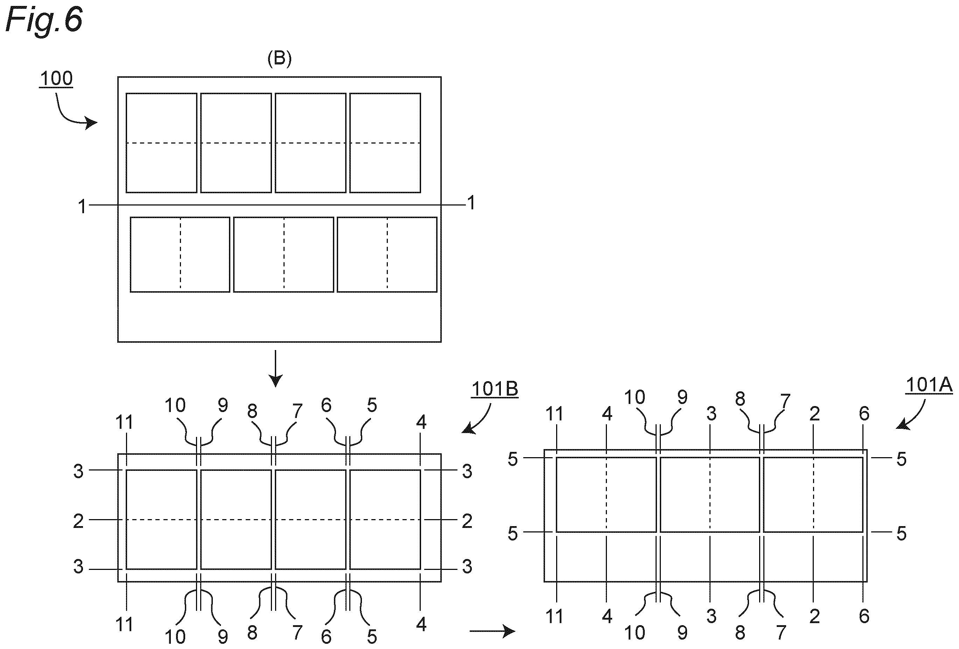

Further, after creating the arrangement layout that is realizable by the second sheet process apparatus 3, the candidate creation unit 811 creates an arrangement layout that is realizable also by the first sheet process apparatus 1. For example, as illustrated in Fig. 6, in the candidate B, the sheet 100 is cut along a line 1 to form two sheet pieces 101A and 101B, but the sheet piece 101A can be processed in the second sheet process apparatus 3 such that perforation machining is performed along lines 2, 3, and 4, cutting machining is performed along lines 5 and 5, and cutting machining is performed along lines 6, 7, 8, 9, 10, and 11, and the sheet piece 101B can be processed such that perforation machining is performed along a line 2, cutting machining is performed along lines 3 and 3, and cutting machining is performed along lines 4, 5, 6, 7, 8, 9, 10, and 11. That is, the candidate B includes the arrangement layout that is realizable by the second sheet process apparatus 3, and further includes the arrangement layout that is realizable by the first sheet process apparatus 1. The same applies to the other candidates A, C to F.

(3) Next, the candidate selection unit 812 of the layout setting unit 81 selects a specific candidate from the six candidates A to F on the basis of the input predetermined criterion.

(3-1) In a case where the predetermined criterion is "the number of impositions per sheet is maximum", the candidate selection unit 812 selects a candidate having the largest number of products 110 (that is, the number of impositions) arranged in one sheet 100, that is, the candidate D.

(3-2) In a case where the predetermined criterion is "the process time per product is minimum", the candidate selection unit 812 selects the candidate A by performing a comparison process as follows for each candidate. Here, the candidates A and D will be mainly described.

### • Comparison process

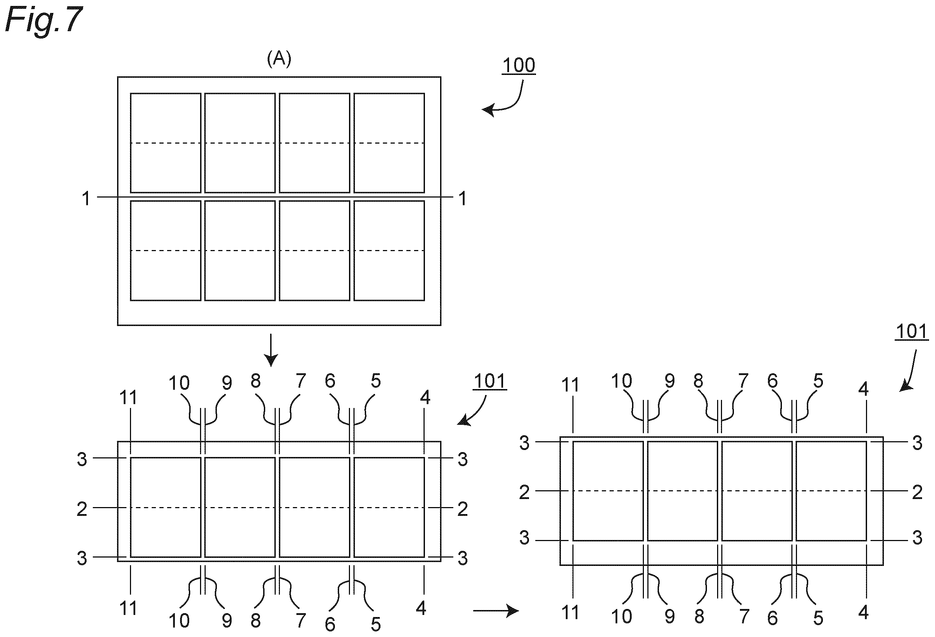

- The sheet 100 of the candidate A is processed by the first sheet process apparatus 1 and the second sheet process apparatus 3 as illustrated in Fig. 7. First, in the first sheet process apparatus 1, the sheet 100 of the candidate A is cut along a line 1 by the machining device 11 to become two sheet pieces 101. The two sheet pieces 101 are lined up in front and behind to be transferred to the second sheet process apparatus 3. In the second sheet process apparatus 3, each of the two sheet pieces 101 is formed with a perforation along a line 2 by the machining device 31, is cut along lines 3 and 3 by the machining device 33 or the machining device 34, and is cut along lines 4, 5, 6, 7, 8, 9, 10, and 11 by the machining device 35. In such machining, the machining that affects the process speed is machining in the width direction which needs to be performed by stopping the transfer of the sheet 100 and the sheet piece 101, that is, machining along a line 1 with respect to the sheet 100 and along lines 4, 5, 6, 7, 8, 9, 10, and 11 with respect to the sheet piece 101. That is, the number of times of stop required in the process of the candidate A is 1 for the sheet 100, and 8 × 2 for the two sheet pieces 101.

Meanwhile, as the "process time", at least a required time (machining time) in the machining device that performs machining affecting the process speed is used as an index. The required time is obtained by the product of the "number of times of stop" in the machining device and the "machining coefficient" according to the type of the machining device. Note that the required time in the machining device that performs machining that does not affect the process speed can be ignored, and thus may be or may not be included in the process time. The machining coefficient is set to 3.0 for the machining device 11 (cutting along the width direction X1), 4.0 for the machining device 32 (perforation formation along the width direction X2), and 1.0 for the machining device 35 (cutting along the width direction X2), for example. For the machining coefficient in the machining device 32, the machining coefficient may be changed according to the length of the perforation formed in the sheet piece in the width direction X2 (however, set to a numerical value larger than 1.0).

For the candidate A, since the transfer is stopped once in the machining device 11 and the transfer is stopped 8 × 2 = 16 times in the machining device 35, the process time is 1 × 3.0 + 16 × 1.0 = 19.0, and since the number of products is 8, the process time per product is 19.0/8 = 2.375.

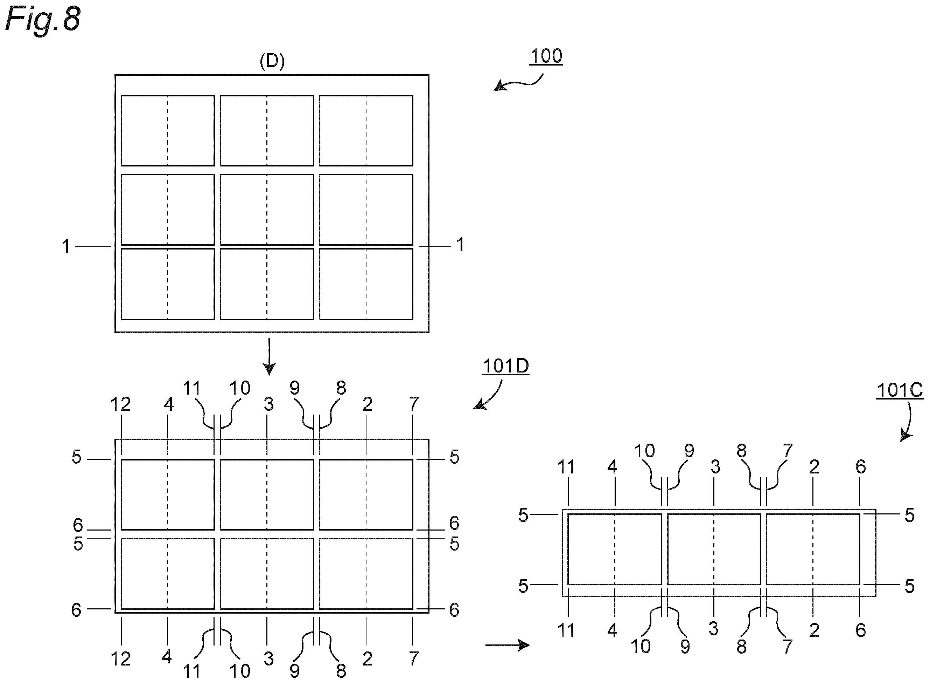

- The sheet 100 of the candidate D is processed by the first sheet process apparatus 1 and the second sheet process apparatus 3 as illustrated in Fig. 8. First, in the first sheet process apparatus 1, the sheet 100 of the candidate D is cut along a line 1 by the machining device 11 to become two sheet pieces 101C and 101D. The two sheet pieces 101C and 101D are lined up in front and behind to be transferred to the second sheet process apparatus 3. In the second sheet process apparatus 3, the sheet piece 101C is formed with perforations along lines 2, 3, and 4 by the machining device 32, is cut along lines 5 and 5 by the machining device 33, and is cut along lines 6, 7, 8, 9, 10, and 11 by the machining device 35. In the second sheet process apparatus 3, the sheet piece 101D is formed with perforations along lines 2, 3, and 4 by the machining device 32, is cut along lines 5 and 5 by the machining device 33 or the machining device 34, is cut along lines 6 and 6 by the machining device 34, and is cut along lines 7, 8, 9, 10, 11, and 12 by the machining device 35. In such machining, the machining that affects the process speed is machining in the width direction which needs to be performed by stopping the transfer of the sheet 100 and the sheet pieces 101C and 101D, that is, machining along a line 1 with respect to the sheet 100, along lines 2, 3, 4, 6, 7, 8, 9, 10, and 11 with respect to the sheet piece 101C, and along lines 2, 3, 4, 7, 8, 9, 10, 11, and 12 with respect to the sheet piece 101D. That is, the number of times of stop required in the process of the candidate D is 1 for the sheet 100, 9 for the sheet piece 101C, and 9 for the sheet piece 101D.

For the candidate D, since the transfer is stopped once in the machining device 11, the transfer is stopped 3 × 2 = 6 times in the machining device 32, and the transfer is stopped 6 × 2 = 12 times in the machining device 35, the process time is 1 × 3.0 + 6 × 4.0 + 12 × 1.0 = 39.0, and since the number of products is 9, the process time per product is 39.0/9 = 4.333.
- The process time per product for the other candidates is calculated as follows similarly to the candidates A and D.
- For the candidate B, since the process time is 1 × 3.0 + 3 × 4.0 + 14 × 1.0 = 29.0 and the number of products is 7, the process time per product is 29.0/7 = 4.143.
- For the candidate C, since the process time is 1 × 3.0 + 6 × 4.0 + 12 × 1.0 = 39.0 and the number of products is 6, the process time per product is 39.0/6 = 6.5.
- For the candidate E, since the process time is 1 × 3.0 + 12 × 1.0 = 15.0 and the number of products is 6, the process time per product is 15.0/6 = 2.5.
- For the candidate F, since the process time is 1 × 3.0 + 4 × 4.0 + 8 × 1.0 = 27.0 and the number of products is 6, the process time per product is 27.0/6 = 4.5.

Therefore, the candidate selection unit 812 selects the candidate A having the minimum process time per product.

(4) When the candidate A or the candidate D is selected as the specific candidate, the data generation unit 8 generates machining data for operating the first sheet process apparatus 1 and the second sheet process apparatus 3 to obtain the products 110 from the sheet 100 of the candidate A or the candidate D. Specifically, the data generation unit 8 generates machining data piece for operating the first sheet process apparatus 1 and machining data piece for operating the second sheet process apparatus 3 at a time. Note that the machining data piece for the second sheet process apparatus 3 includes cutting machining for finish-cutting the sheet piece 101 into the products 110.

### (4-1) Machining Data in Case of Candidate A

(i) Operating the machining device 11 once → (ii) operating the machining device 31 once → operating the machining device 33 or the machining device 34 once → operating the machining device 35 eight times → (iii) operating the machining device 31 once → operating the machining device 33 or the machining device 34 once → operating the machining device 35 eight times.

In the machining data, (i) is the machining data piece for the first sheet process apparatus 1, and (ii) and (iii) are the machining data piece for the second sheet process apparatus 3.

### (4-2) Machining Data in Case of Candidate D

(i) Operating the machining device 11 once → (ii) operating the machining device 32 three times → operating the machining device 33 or the machining device 34 once → operating the machining device 35 six times → (iii) operating the machining device 32 three times → operating the machining device 33 once → operating the machining device 34 once → operating the machining device 35 six times.

In the machining data, (i) is the machining data piece for the first sheet process apparatus 1, and (ii) and (iii) are the machining data piece for the second sheet process apparatus 3. Further, (ii) is machining data piece for the sheet piece 101C, and (iii) is machining data piece for the sheet piece 101D.

(5) Then, the data output unit 71 outputs the machining data piece (i) for the first sheet process apparatus 1 to the first sheet process apparatus 1, and outputs the machining data pieces (ii) and (iii) for the second sheet process apparatus 3 to the second sheet process apparatus 3.

### (Effects of Machining Data Generation Apparatus)

According to the present embodiment, when the user inputs the machining condition from the machining condition input unit 51 and inputs the predetermined criterion from the criterion input unit 52, the machining data piece (i) for the first sheet process apparatus 1 and the machining data pieces (ii) and (iii) for the second sheet process apparatus 3 are generated at a time as the machining data, and are sent to the first sheet process apparatus 1 and the second sheet process apparatus 3. Therefore, the user is free from the trouble of creating the machining data by setting the machining condition for the first sheet process apparatus, and creating the machining data by setting the machining condition for the second sheet process apparatus. That is, in a case where a large number of products are obtained from a sheet by using two sheet process apparatuses, the user can easily create the machining data.

In the present embodiment, the size (B2 in this case) of the sheet supplied to the first sheet process apparatus 1 is larger than the size of the sheet suppliable to the second sheet process apparatus 3, but, according to the present embodiment, the machining data indicating that the process of the first sheet process apparatus 1 includes the cutting machining of cutting the sheet 100 can be generated. As a result, the sheet pieces that have been cut to be smaller can be supplied to the second sheet process apparatus 3, and thus the process in the second sheet process apparatus 3 can be executed.

That is, according to the present invention, in a case where the size of the sheet supplied to the sheet process apparatus that executes the N-th-time process is larger than the size of the sheet suppliable to the sheet process apparatus that executes the N+1-th-time process (N is an integer of 1 or more), the machining data indicating that the process of the sheet process apparatus that executes the N-th-time process includes the cutting machining of cutting the sheet can be generated. As a result, the sheet pieces that have been cut to be smaller can be supplied to the sheet process apparatus that executes the N+1-th-time process, and thus the process in the sheet process apparatus that executes the N+1-th-time process can be executed. More simply, even in a case where a large-sized sheet is used, it is possible to generate machining data that enables that a sheet is cut at an appropriate timing in a previous stage of the sheet process apparatus that can process only a small-sized sheet, to obtain small-sized sheet pieces, and as a result, it is possible to execute the process in the sheet process apparatus that can process only a small-sized sheet.

### (Operation of Sheet Process System)

When machining data is output from the machining data generation apparatus to the first sheet process apparatus 1 and the second sheet process apparatus 3, the first sheet process apparatus 1 and the second sheet process apparatus 3 are operated on the basis of the machining data.

### (Effects of Sheet Process System)

According to the present embodiment, the user can easily generate the machining data for operating the first sheet process apparatus 1 and the second sheet process apparatus 3 only by inputting the machining condition from the machining condition input unit 51 and inputting the predetermined criterion from the criterion input unit 52, and can operate the first sheet process apparatus 1 and the second sheet process apparatus 3 on the basis of the machining data. Therefore, the user can easily obtain the product in the system that obtains a large number of products from the sheet by using the two sheet process apparatuses.

### [Second Embodiment]

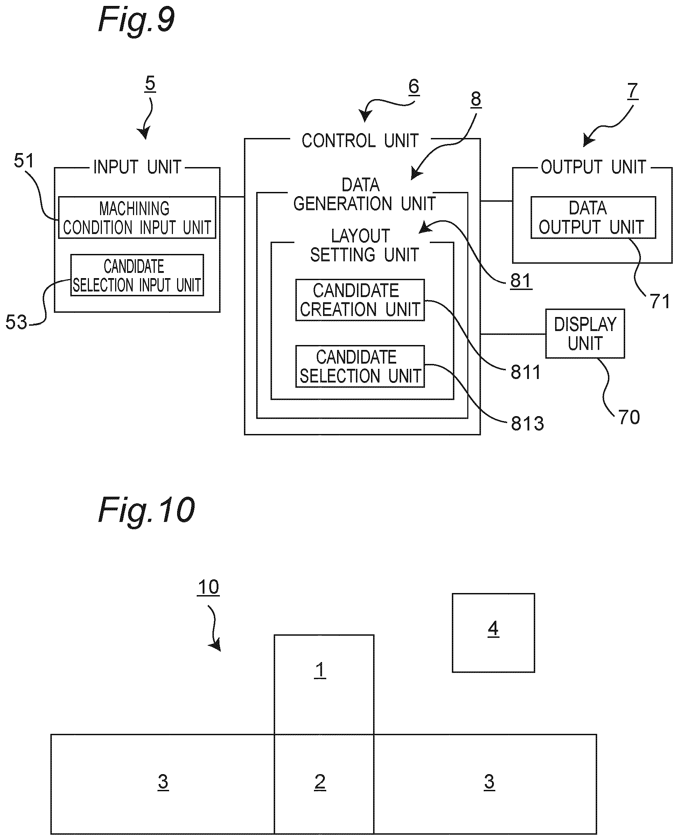

As illustrated in Fig. 9, the present embodiment is different from the first embodiment in the layout setting unit 81 and the input unit 5. Furthermore, the present embodiment includes a display unit 70 such as a display and a panel.

The layout setting unit 81 includes the candidate creation unit 811 and a candidate display unit 813. The input unit 5 includes the machining condition input unit 51 and a candidate selection input unit 53.

In the present embodiment, when the candidate creation unit 811 creates six candidates A to F as illustrated in Fig. 4, the candidate display unit 813 displays the candidates A to F on the display unit 70. The user can select a desired candidate among the displayed candidates A to F by the candidate selection input unit 53.

When a desired candidate is selected, the machining data is generated and is sent to the first sheet process apparatus 1 and the second sheet process apparatus 3 as described in (4) and the following description for the operation of the first embodiment.

According to the present embodiment, since the user can select a candidate for the arrangement layout, it is easy to select the candidate, and it is possible to improve the work efficiency.

### [Third Embodiment]

The sheet process system of the present invention also includes a case where three or more sheet process apparatuses are used. The sheet process system of the present embodiment uses three sheet process apparatuses.

Fig. 10 is a schematic plan view illustrating the sheet process system 10 of the present embodiment. The sheet process system 10 includes the first sheet process apparatus 1, the right angle transfer apparatus 2, two second sheet process apparatuses 3, and the machining data generation apparatus 4. The sheet process system 10 of the present embodiment is different from that of the first embodiment or the second embodiment only in that three sheet process apparatuses are provided.

The two second sheet process apparatuses 3 are provided on both sides of the right angle transfer apparatus 2, and the right angle transfer apparatus 2 transfers one of two sheet pieces transferred from the first sheet process apparatus 1 to one second sheet process apparatus 3 and transfers the other sheet piece to the other second sheet process apparatus 3.

Similarly to the first embodiment or the second embodiment, the machining data generation apparatus 4 generates the machining data including the machining data pieces (i) to (iii). Then, the machining data generation apparatus 4 outputs the machining data piece (i) to the first sheet process apparatus 1, outputs the machining data piece (ii) to one second sheet process apparatus 3, and outputs the machining data piece (iii) to the other second sheet process apparatus 3.

According to the present embodiment, the same effects as those of the first embodiment can be exhibited. Further, according to the present embodiment, since the two second sheet process apparatuses 3 are operated substantially at the same time, it is possible to improve the work efficiency.

### [Fourth Embodiment]

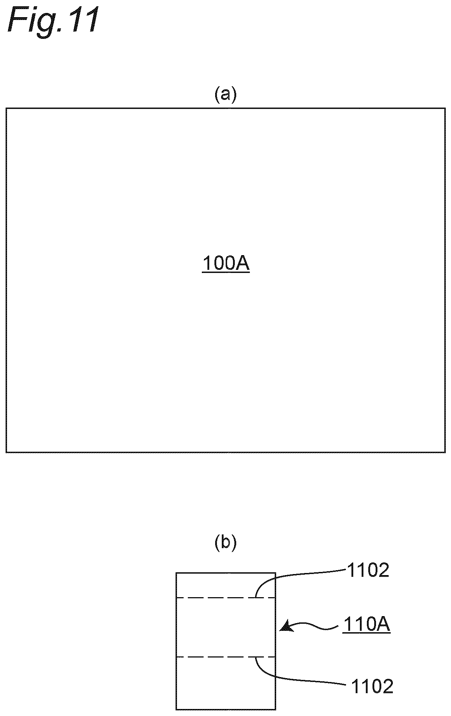

The sheet process system of the present invention also includes a case where only one sheet process apparatus is used. In the present embodiment, a case will be described in which the sheet process system forms a large number of products 110A having a business card size illustrated in (b) of Fig. 11, from one sheet 100A having an A4 size illustrated in (a) of Fig. 11. The product 110A has two concave creases 1102. Note that the sheet 100A and the product 110A are merely examples.

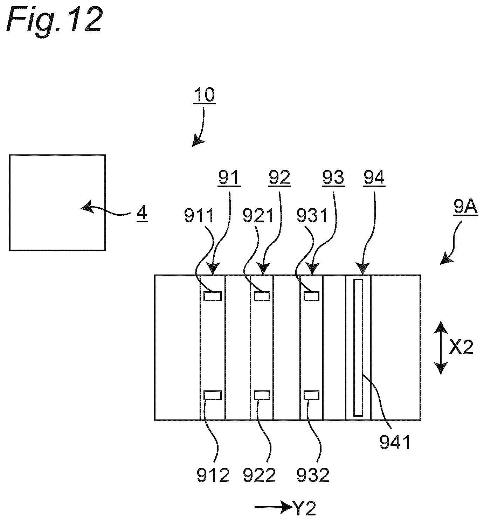

Fig. 12 is a schematic plan view illustrating the sheet process system 10 of the present embodiment. The sheet process system 10 includes the machining data generation apparatus 4 and a sheet process apparatus 9A. That is, the sheet process system 10 of the present embodiment is different from that of the first embodiment or the second embodiment only in that only one sheet process apparatus is used.

The sheet process apparatus 9A includes machining devices 91, 92, 93, and 94. The machining device 91 includes two concave crease blades 911 and 912, and forms concave creases along the transfer direction Y2 at arbitrary two positions of the sheet 100A in the width direction X2. The machining device 92 includes two slitters 921 and 922, and cuts arbitrary two portions of the sheet 100A in the width direction X2 along the transfer direction Y2. The machining device 93 includes two slitters 931 and 932, and cuts arbitrary two portions of the sheet 100A in the width direction X2 along the transfer direction Y2. The machining device 94 includes a guillotine blade 941 disposed along the width direction X2, and cuts the sheet 100A along the width direction X2.

Also in the sheet process system 10 of the present embodiment, similarly to the first embodiment or the second embodiment, the machining data generation apparatus 4 is operated to select the candidate for the arrangement layout and generate the machining data. However, the machining data includes contents for causing the sheet process apparatus 9A to continuously execute the process twice, and as the machining data, a machining data piece for causing the sheet process apparatus 9A to execute the first-time process and a machining data piece for causing the sheet process apparatus 9A to execute the second-time process are generated at a time. Then, the machining data pieces are continuously sent to the sheet process apparatus 9A.

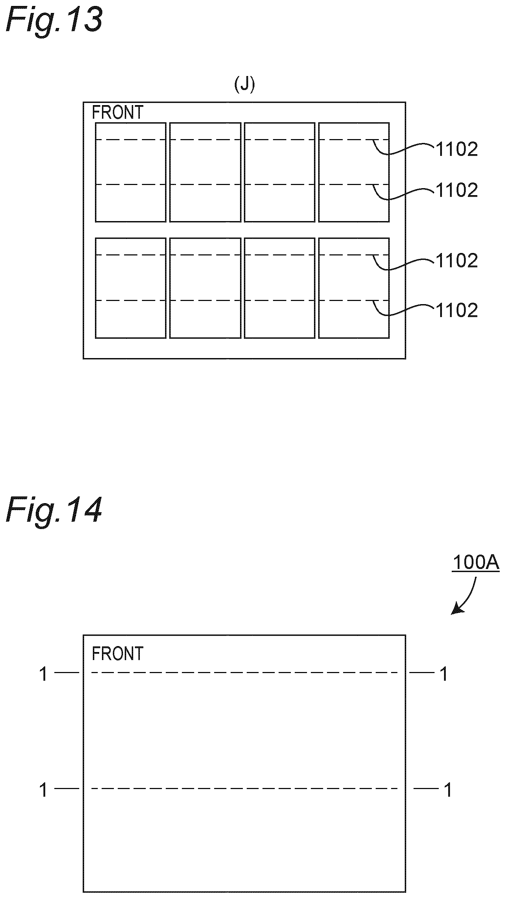

For example, in a case where an arrangement layout J illustrated in Fig. 13 is selected, the machining data is generated as follows.

### (Machining Data Piece for Executing First-time Process)

As illustrated in Fig. 14, the machining data piece is "operating the machining device 91 once" for forming creases along lines 1 and 1.

### (Machining Data Piece for Executing Second-time Process)

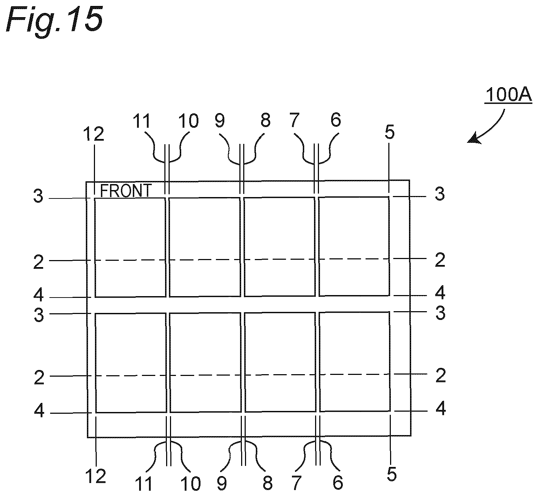

As illustrated in Fig. 15, the machining data pieces are "operating the machining device 91 once" for forming creases along lines 2 and 2, "operating the machining device 92 once" for cutting along lines 3 and 3, "operating the machining device 93 once" for cutting along lines 4 and 4, and "operating the machining device 94 eight times" for cutting along lines 5, 6, 7, 8, 9, 10, 11, and 12.

According to the present embodiment, the same effects as those of the first embodiment or the second embodiment can be exhibited.

### [Fifth Embodiment]

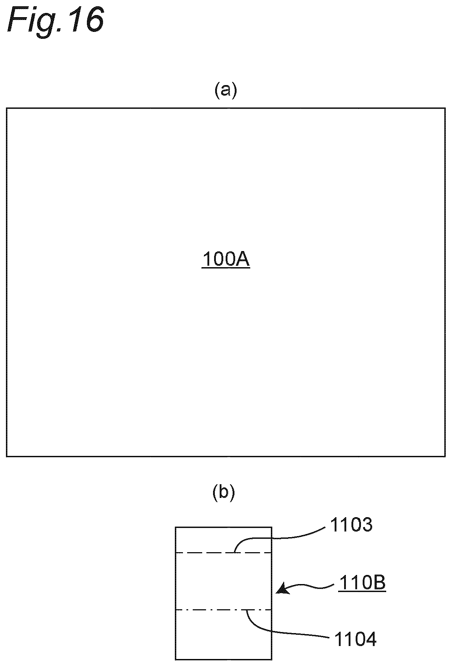

The sheet process system of the present invention also includes a case where only one sheet process apparatus is used. In the present embodiment, a case will be described in which the sheet process system forms a large number of products 110B having a business card size illustrated in (b) of Fig. 16, from one sheet 100A having an A4 size illustrated in (a) of Fig. 16. The product 110B has a concave crease 1103 and a convex crease 1104. Note that the sheet 100A and the product 110B are merely examples.

The sheet process system 10 of the present embodiment is the same as that of the fourth embodiment (Fig. 12).

Also in the sheet process system 10 of the present embodiment, similarly to the first embodiment or the second embodiment, the machining data generation apparatus 4 is operated to select the candidate for the arrangement layout and generate the machining data. However, the machining data includes contents for causing the sheet process apparatus 9A to continuously execute the process twice, and as the machining data, a machining data piece for causing the sheet process apparatus 9A to execute the first-time process and a machining data piece for causing the sheet process apparatus 9A to execute the second-time process are generated at a time. Then, the machining data pieces are continuously sent to the sheet process apparatus 9A.

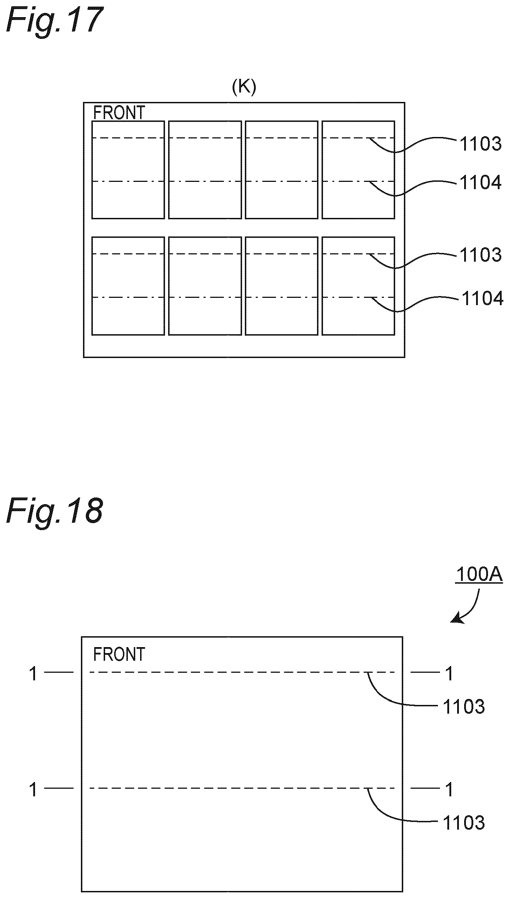

For example, in a case where an arrangement layout K illustrated in Fig. 17 is selected, the machining data is generated as follows.

### (Machining Data Piece for Executing First-time Process)

As illustrated in Fig. 18, the machining data piece is "operating the machining device 91 once" for forming creases along lines 1 and 1. Thus, the concave creases 1103 are formed.

### (Machining Data Piece for Executing Second-time Process)

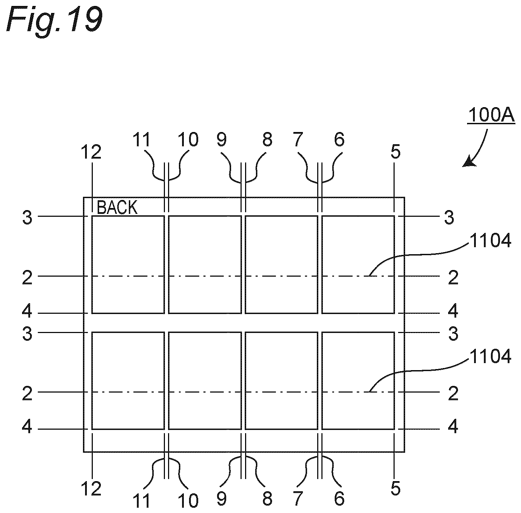

For the sheet 100A in a state in which the back side is upward, as illustrated in Fig. 19, the machining data pieces are "operating the machining device 91 once" for forming creases along lines 2 and 2 (as a result, the convex creases 1104 in the sheet 100A in a state in which the front side is upward are formed), "operating the machining device 92 once" for cutting along lines 3 and 3, "operating the machining device 93 once" for cutting along lines 4 and 4, and "operating the machining device 94 eight times" for cutting along lines 5, 6, 7, 8, 9, 10, 11, and 12.

According to the present embodiment, the same effects as those of the first embodiment or the second embodiment can be exhibited.

### [Sixth Embodiment]

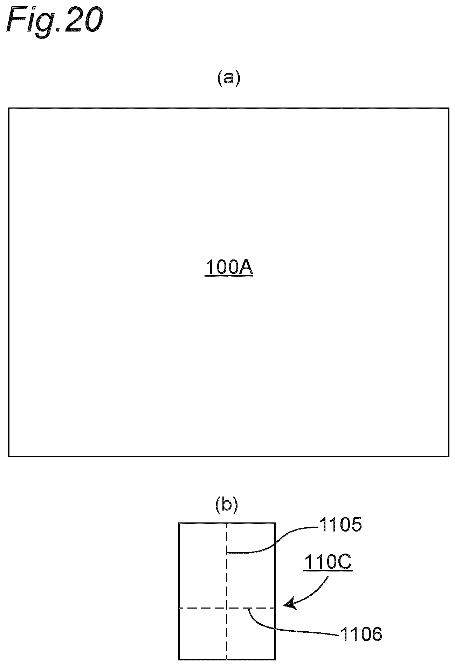

The sheet process system of the present invention also includes a case where only one sheet process apparatus is used. In the present embodiment, a case will be described in which the sheet process system forms a large number of products 110C having a business card size illustrated in (b) of Fig. 20, from one sheet 100A having an A4 size illustrated in (a) of Fig. 20. The product 110C has two perforations 1105 and 1106 intersecting in a cross. Note that the sheet 100A and the product 110C are merely examples.

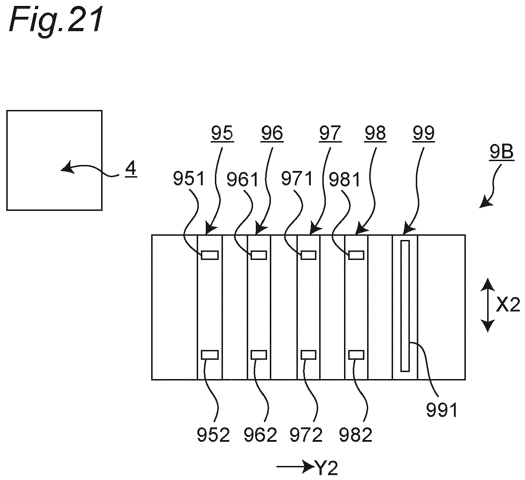

Fig. 21 is a schematic plan view illustrating the sheet process system 10 of the present embodiment. The sheet process system 10 includes the machining data generation apparatus 4 and a sheet process apparatus 9B. That is, the sheet process system 10 of the present embodiment is different from that of the first embodiment or the second embodiment only in that only one sheet process apparatus is used.

The sheet process apparatus 9B includes machining devices 95, 96, 97, 98, and 99. The machining device 95 includes two perforation forming blades 951 and 952, and forms perforations along the transfer direction Y2 at arbitrary two positions of the sheet 100A in the width direction X2. The machining device 96 includes two perforation forming blades 961 and 962, and forms perforations along the transfer direction Y2 at arbitrary two positions of the sheet 100A in the width direction X2. The machining device 97 includes two slitters 971 and 972, and cuts arbitrary two portions of the sheet 100A in the width direction X2 along the transfer direction Y2. The machining device 98 includes two slitters 981 and 982, and cuts arbitrary two portions of the sheet 100A in the width direction X2 along the transfer direction Y2. The machining device 99 includes a guillotine blade 991 disposed along the width direction X2, and cuts the sheet 100A along the width direction X2.

Also in the sheet process system 10 of the present embodiment, similarly to the first embodiment or the second embodiment, the machining data generation apparatus 4 is operated to select the candidate for the arrangement layout and generate the machining data. However, the machining data includes contents for causing the sheet process apparatus 9B to continuously execute the process twice, and as the machining data, a machining data piece for causing the sheet process apparatus 9B to execute the first-time process and a machining data piece for causing the sheet process apparatus 9B to execute the second-time process are generated at a time. Then, the machining data pieces are continuously sent to the sheet process apparatus 9B.

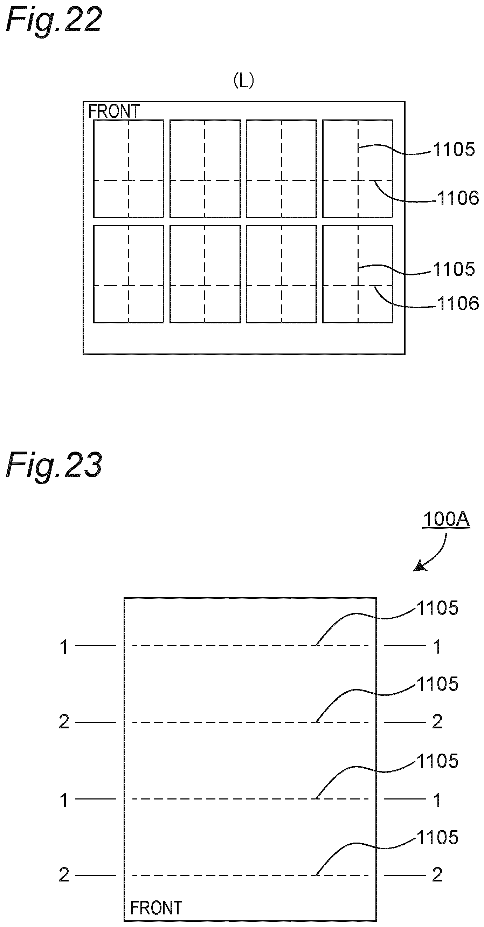

For example, in a case where an arrangement layout L illustrated in Fig. 22 is selected, the machining data is generated as follows.

### (Machining Data Piece for Executing First-time Process)

For the sheet 100A in a state of being rotated by 90 degrees, as illustrated in Fig. 23, the machining data pieces are "operating the machining device 95 once" for forming perforations along lines 1 and 1, and "operating the machining device 96 once" for forming perforations along lines 2 and 2. Accordingly, four perforations 1105 are formed.

### (Machining Data Piece for Executing Second-time Process)

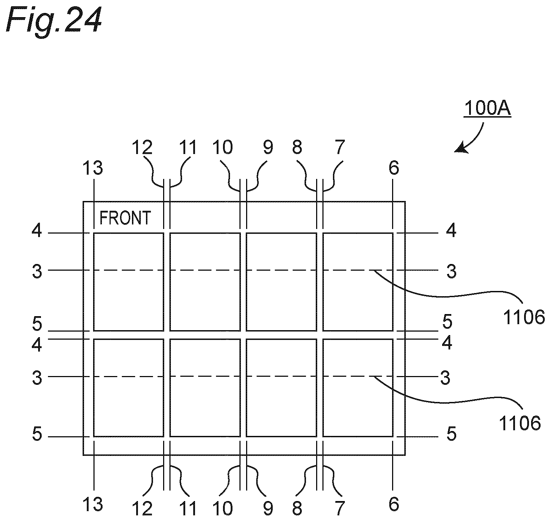

For the sheet 100A in a state of being returned to 0 degrees, as illustrated in Fig. 24, the machining data pieces are "operating the machining device 95 once" for forming perforations along lines 3 and 3 (as a result, two perforations 1106 are formed),"operating the machining device 97 once" for cutting along lines 4 and 4, "operating the machining device 98 once" for cutting along lines 5 and 5, and "operating the machining device 99 eight times" for cutting along lines 6, 7, 8, 9, 10, 11, 12, and 13.

According to the present embodiment, the same effects as those of the first embodiment or the second embodiment can be exhibited.

### [Seventh Embodiment]

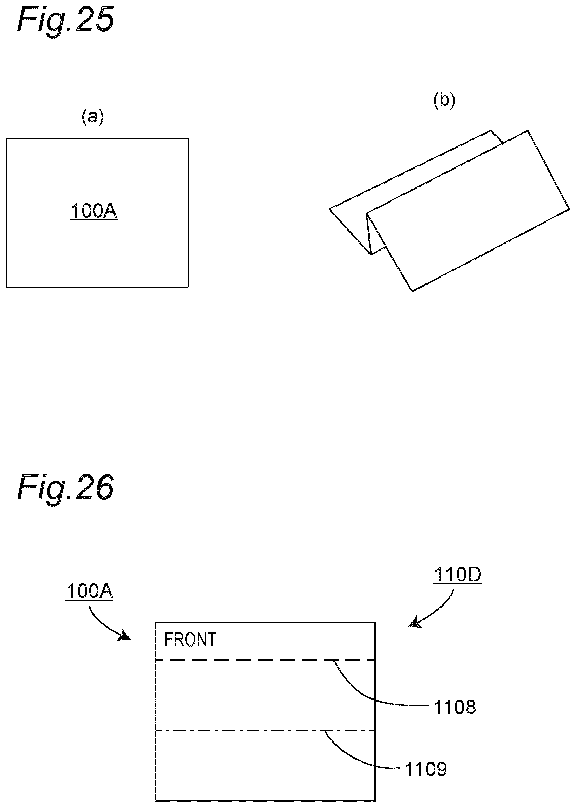

The sheet process system of the present invention also includes a case where one product is obtained from one sheet. As such a case, as illustrated in Fig. 25, for example, there is a case where one sheet 100A having an A4 size in (a) of Fig. 25 is machined into a Z-foldable state as in (b) of Fig. 25. In this case, as illustrated in Fig. 26, a product 110D is the sheet 100A having a concave crease 1108 and a convex crease 1109. Note that the sheet 100A and the product 110D are merely examples.

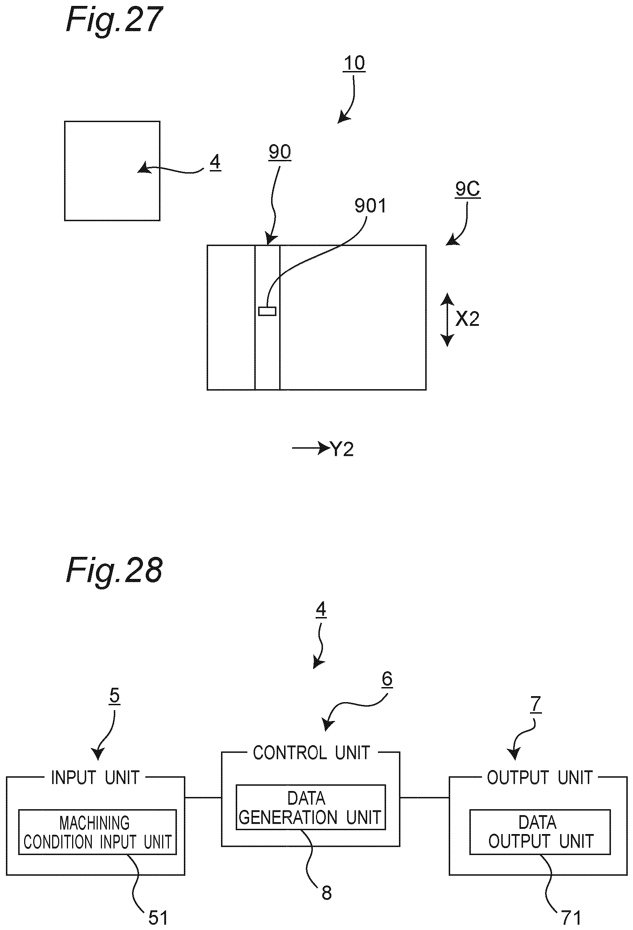

Fig. 27 is a schematic plan view illustrating the sheet process system 10 of the present embodiment. The sheet process system 10 includes the machining data generation apparatus 4 and a sheet process apparatus 9C. That is, the sheet process system 10 of the present embodiment uses only one sheet process apparatus.

The sheet process apparatus 9C includes a machining device 90. The machining device 90 includes one concave crease blade 901, and forms a concave crease along the transfer direction Y2 at an arbitrary position of the sheet 100A in the width direction X2.

As illustrated in Fig. 28, in the machining data generation apparatus 4, the input unit 5 includes only the machining condition input unit 51, and the data generation unit 8 does not include a layout setting unit. In the sheet process system 10 of the present embodiment, when the user inputs a machining condition from the machining condition input unit 51, the data generation unit 8 generates machining data without creating an arrangement layout. However, the machining data includes contents for causing the sheet process apparatus 9C to continuously execute the process twice, and as the machining data, a machining data piece for causing the sheet process apparatus 9C to execute the first-time process and a machining data piece for causing the sheet process apparatus 9C to execute the second-time process are generated at a time. Then, the machining data pieces are continuously sent to the sheet process apparatus 9C.

The machining data is generated as follows.

### (Machining Data Piece for Executing First-time Process)

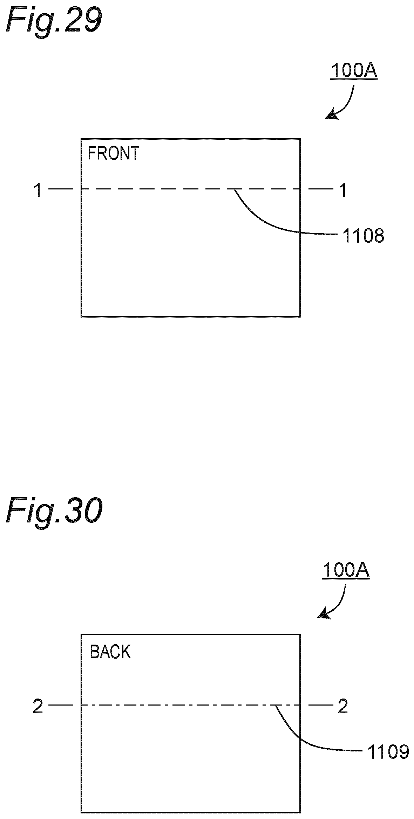

For the sheet 100A, as illustrated in Fig. 29, the machining data piece is "operating the machining device 90 once" for forming a crease along a line 1. Thus, a concave crease 1108 is formed.

### (Machining Data Piece for Executing Second-time Process)

For the sheet 100A in a state in which the back side is upward, as illustrated in Fig. 30, the machining data piece is "operating the machining device 90 once" for forming a crease along a line 2. As a result, a convex crease 1109 in the sheet 100A in a state in which the front side is upward is formed.

According to the present embodiment, the same effects as those of the first embodiment or the second embodiment can be exhibited.

In the present embodiment, two sheet process apparatuses may be used. In this case, one sheet process apparatus includes a machining device having one concave crease blade, and forms the concave crease 1108 on the sheet 100A, and the other sheet process apparatus includes a machining device having one convex crease blade, and forms the convex crease 1109 on the sheet 100A.

### [Other Embodiments]

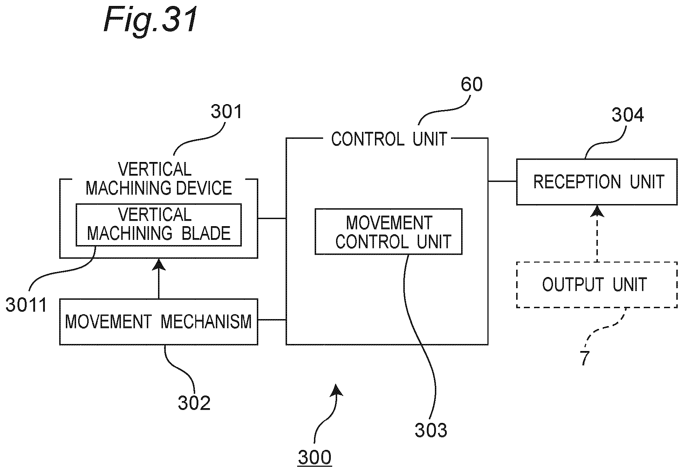

(1) The machining condition input from the machining condition input unit 51 may be only the size of the sheet and the size of the product.
(2) The machining condition input from the machining condition input unit 51 may include the dimension of the margin between the edge of the sheet and the product and/or the dimension of the margin between the product and the product. In this case, the layout setting unit can set an arrangement layout in consideration of the dimension of the margin input as the machining condition.
(3) The machining condition input from the machining condition input unit 51 may include the number of impositions. In this case, the layout setting unit can set an arrangement layout in consideration of the number of impositions input as the machining condition.
(4) The candidate creation unit 811 of the layout setting unit 81 may create candidates from the arrangement layout that is realizable by the previous process among a plurality of times of the processes.
(5) It is preferable that the machining data generation apparatus of the present invention generates the machining data indicating that, in a case where, in the sheet process apparatus that executes the N-th-time process, the size of the supplied sheet is larger than the size of the dischargeable sheet (N is an integer of 1 or more), the N-th-time process includes the cutting machining of cutting the sheet. For example, in the first embodiment, it is preferable that, in a case where, in the first sheet process apparatus 1, the size of the supplied sheet is larger than the size of the dischargeable sheet, the machining data indicating that the process of the first sheet process apparatus 1 includes cutting machining of cutting the sheet is generated. According to this, it is possible to reliably discharge the sheet, which has been cut to be smaller, from the first sheet process apparatus 1, and to execute the next stage process on the sheet.
(6) It is preferable that the sheet process system 10 of the present invention includes the following sheet process apparatus 300. As illustrated in Fig. 31 which is a block diagram, the sheet process apparatus 300 includes a vertical machining device 301 that machines the sheet along the transfer direction, a movement mechanism 302 that moves a vertical machining blade 3011 of the vertical machining device 301 in the width direction orthogonal to the transfer direction, and a movement control unit 303 that controls the movement mechanism 302.

The vertical machining blade 3011 of the vertical machining device 301 is, for example, the perforation forming blade 311 of the machining device 31, the slitter 331 or 332 of the machining device 33, or the slitter 341 or 342 of the machining device 34 of the second sheet process apparatus 3 illustrated in Fig. 2; the concave crease blade 911 or 912 of the machining device 91, the slitter 921 or 922 of the machining device 92, or the slitter 931 or 932 of the machining device 93 of the sheet process apparatus 9A illustrated in Fig. 12; or the perforation forming blade 951 or 952 of the machining device 95, the perforation forming blade 961 or 962 of the machining device 96, the slitter 971 or 972 of the machining device 97, or the slitter 981 or 982 of the machining device 98 of the sheet process apparatus 9B illustrated in Fig. 21.

The movement mechanism 302 can adopt a known mechanism, for example, a mechanism using a slide rail and a rotating rod screw shaft. The movement control unit 303 is included in the control unit 60 that controls the operation of the sheet process apparatus 300. The control unit 60 is realized by a CPU, a ROM, a RAM, and the like. Further, the sheet process apparatus 300 includes a reception unit 304 that receives an output from the output unit 7 of the machining data generation apparatus 4. The control unit 60 controls the operation of the sheet process apparatus 300 on the basis of the output from the output unit 7 received by the reception unit 304.

Then, in a case where it is necessary to move the vertical machining blade 3011 of the vertical machining device 301 in the width direction X2 (refer to Fig. 2) on the basis of the machining data piece of the machining data generated by the data generation unit 8 of the machining data generation apparatus 4, the movement control unit 303 controls the movement mechanism 302 such that the movement mechanism 302 directly moves the vertical machining blade 3011 from the position of the vertical machining blade 3011 in the preceding vertical machining device 301 in the width direction X2 to the position of the vertical machining blade 3011 in the following vertical machining device 301 in the width direction X2. This movement is referred to as "relative movement".

Then, in a case where it is necessary to move the vertical machining blade 3011 of the vertical machining device 301 in the width direction X2 on the basis of the machining data piece of the machining data generated by the data generation unit 8 of the machining data generation apparatus 4 and it is necessary to initialize the position of the vertical machining blade 3011 in the width direction X2, the movement control unit 303 controls the movement mechanism 302 such that the movement mechanism 302 directly moves the vertical machining blade 3011 from the position of the vertical machining blade 3011 in the preceding vertical machining device 301 in the width direction X2 to a reference position set to a predetermined position in the width direction X2, and then moves the vertical machining blade 3011 to the position of the vertical machining blade 3011 in the following vertical machining device 301 in the width direction X2. This movement is referred to as "absolute movement".

The sheet process apparatus 300 having the above configuration is operated as follows, for example.

### [First Example]

The process illustrated in Fig. 7 will be described as an example. In the process of Fig. 7, the first sheet process apparatus 1 processes the sheet 100, and the second sheet process apparatus 3 processes the two sheet pieces 101. However, in this example, the sheet process apparatus 300 processes the two sheet pieces 101.

The two sheet pieces 101 are lined up in front and behind to be transferred to the sheet process apparatus 300. In the sheet process apparatus 300, each of the two sheet pieces 101 is formed with a perforation along a line 2 by the machining device 31, is cut along lines 3 and 3 by the machining device 33 or the machining device 34, and is cut along lines 4, 5, 6, 7, 8, 9, 10, and 11 by the machining device 35. Here, the machining devices 31, 33, and 34 correspond to the vertical machining device 301.

In the above process on the two sheet pieces 101, when the preceding (right side in the drawing) sheet piece 101 and the following (left side in the drawing) sheet piece 101 are viewed in the transfer direction (Y2 direction), the positions of the perforation forming blade 311 of the machining device 31 and the slitters 331 and 332 of the machining device 33 (or the slitters 341 and 342 of the machining device 34) in the width direction (X2 direction), that is, the positions of a line 2 and lines 3 and 3 in the width direction are different from each other, and the positions are close to the left side in the preceding sheet piece 101 and are close to the right side in the following sheet piece 101. Here, the perforation forming blade 311, the slitters 331 and 332, and the slitters 341 and 342 correspond to the vertical machining blade 3011.

Thus, in the sheet process apparatus 300, when the following sheet piece 101 is processed, for example, the perforation forming blade 311 of the machining device 31 is directly moved from the position of the perforation forming blade 311 in the width direction in a case of processing the preceding sheet piece 101 (the position corresponding to the line 2 close to the left side), to the position of the perforation forming blade 311 in the width direction in a case of processing the following sheet piece 101 (the position corresponding to the line 2 close to the right side). That is, the relative movement is performed. The same applies to the machining device 33 (or the machining device 34), that is, when the following sheet piece 101 is processed, in the machining device 33 (or the machining device 34), the slitters 331 and 332 (or the slitters 341 and 342) are directly moved from the positions of the slitters 331 and 332 (or the slitters 341 and 342) in the width direction in a case of processing the preceding sheet piece 101 (positions corresponding to the lines 3 and 3 close to the left side), to the positions of the slitters 331 and 332 (or the slitters 341 and 342) in the width direction in a case of processing the following sheet piece 101 (positions corresponding to the lines 3 and 3 close to the right side). That is, the relative movement is performed.

According to this, for example, in a case where the position of the perforation forming blade 311 in the width direction for the preceding sheet piece 101 (the position of the line 2 close to the left side in the width direction) is 130 mm from the right end of the sheet piece 101, and the position of the perforation forming blade 311 in the width direction for the following sheet piece 101 (the position of the line 2 close to the right side in the width direction) is 120 mm from the right end of the sheet piece 101, it is only necessary to move the perforation forming blade 311 only 10 mm in the right direction when processing the following sheet piece 101. The same applies to the machining device 33 (or the machining device 34).

Note that a relative movement value, which is the distance of the relative movement, is obtained by subtracting "the position of the vertical machining blade 3011 of the following vertical machining device 301 in the width direction" from "the position of the vertical machining blade 3011 of the preceding vertical machining device 301 in the width direction".

Therefore, with the sheet process apparatus 300, since the movement distance of the vertical machining blade 3011 in the width direction can be shortened at the time of the process by the following vertical machining device 301, it is possible to shorten the time required for the movement of the vertical machining blade 3011, and it is possible to improve the productivity.

### [Second Example]

For example, in a case where the process of Fig. 7 is continuously executed on a plurality of sheets 100, the process in the sheet process apparatus 300 is such that "preceding sheet piece 101 → following sheet piece 101" of the above-described first example is continuously executed. That is, the order is as follows: the preceding sheet piece 101 → the following sheet piece 101 → the preceding sheet piece 101 → the following sheet piece 101 →....... In this case, the "relative movement" of the vertical machining blade 3011 of the vertical machining device 301 is performed not only in "the preceding sheet piece 101 → the following sheet piece 101" but also in "the following sheet piece 101 → the preceding sheet piece 101".

Therefore, with the sheet process apparatus 300, it is possible to shorten the movement distance of the vertical machining blade 3011 in the width direction not only at the time of the process by the following vertical machining device 301 but also at the time of the process by the preceding vertical machining device 301, and thus it is possible to further improve the productivity.

### [Third Example]

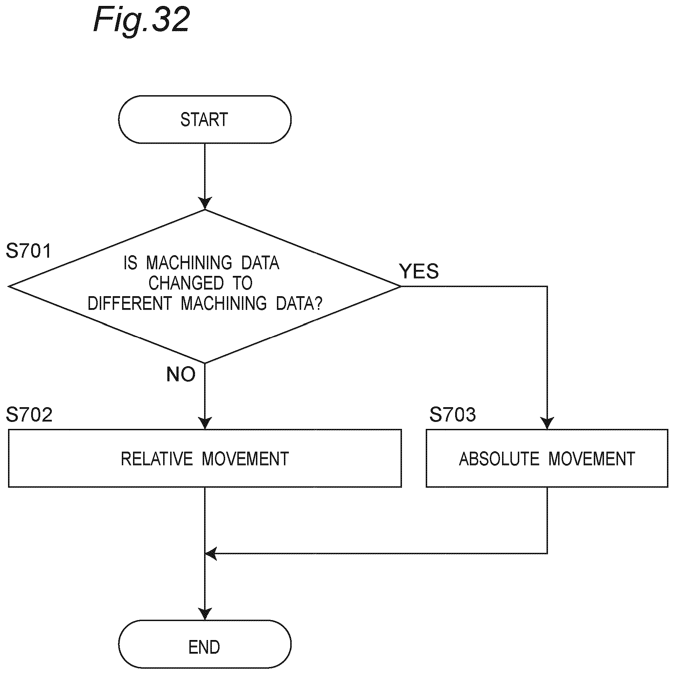

As illustrated in Fig. 32 which is a flowchart, the movement control unit 303 determines whether or not the received machining data has been changed to different machining data (S701), executes a relative movement in a case where it is determined that "the machining data has not been changed" (S702), and executes an absolute movement in a case where it is determined that "the machining data has been changed" (S703). For example, in a case where the process illustrated in Fig. 7 is changed to the process illustrated in Fig. 8, the machining data corresponding to the process illustrated in Fig. 7 is changed to the machining data corresponding to the process illustrated in Fig. 8, and thus, it is determined that "the machining data has been changed" in S701.

According to the present example, since the absolute movement is performed at the beginning of the change of the process, subsequent machining in the changed process can be accurately executed.

### [Fourth Example]

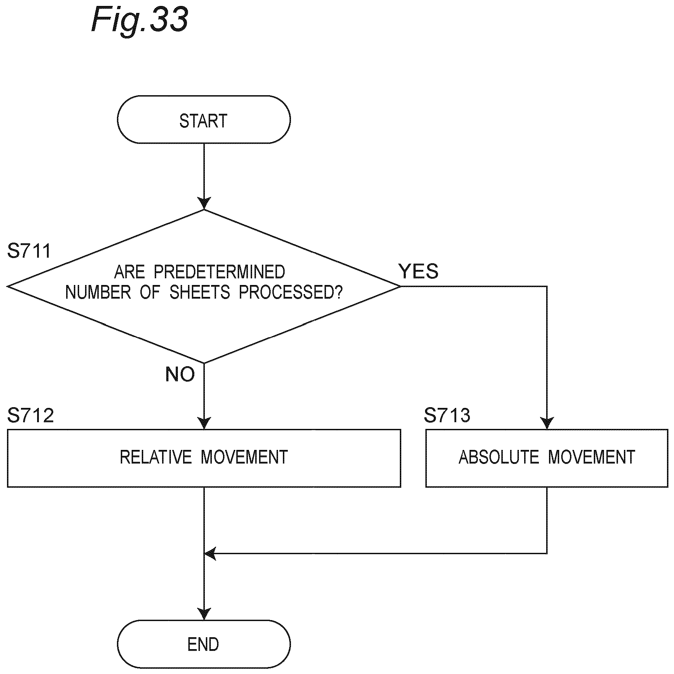

As illustrated in Fig. 33 which is a flowchart, the movement control unit 303 counts the number of processed sheets after the execution of the absolute movement, determines whether or not the counted number has reached a predetermined number (S711), executes the relative movement in a case where it is determined as "the counted number has not reached the predetermined number" (S712), and executes the absolute movement in a case where it is determined that "the counted number has reached the predetermined number" (S713).

According to the present example, the following operational effects can be exhibited.
(a) Since the "relative movement" is continuously executed until the predetermined number of sheets 100 are processed, it is possible to shorten the movement time of the vertical machining blade 3011 in the width direction, and thus it is possible to improve the productivity.
(b) When only the "relative movement" is continuously executed, for example, the position of the vertical machining blade 3011 in the width direction may deviate from an accurate position due to the occurrence of a defect such as step out of the vertical machining blade 3011 or the movement mechanism 302, and the position of the vertical machining blade 3011 in the width direction may deviate even in all subsequent machining. However, in the present example, since the "absolute movement" is executed when the predetermined number (for example, 50) of sheets 100 are processed, even when the position of the vertical machining blade 3011 in the width direction deviates in the previous continuous work of the "relative movement", the deviation can be corrected by the "absolute movement", and the subsequent machining can be accurately executed.

### [Fifth Example]

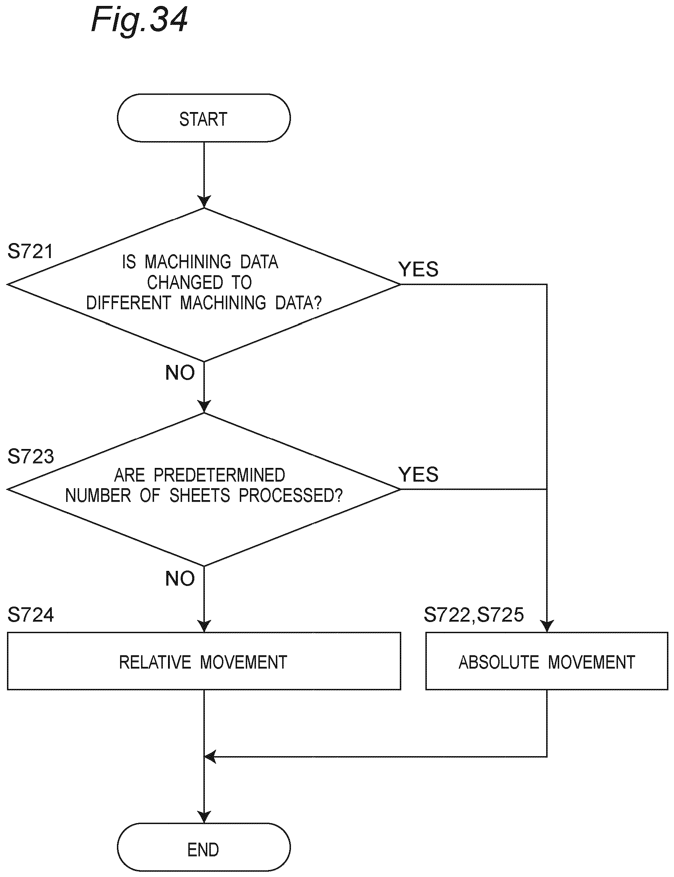

As illustrated in Fig. 34 which is a flowchart, the movement control unit 303 determines whether or not the received machining data is changed to different machining data (S721). The movement control unit 303 executes the absolute movement in a case where it is determined that "the machining data is changed" (S722). In a case where it is determined that "the machining data is not changed", the movement control unit 303 counts the number of processed sheets after the execution of the absolute movement, determines whether or not the counted number has reached the predetermined number (S723), executes the relative movement in a case where it is determined that "the counted number has not reached the predetermined number" (S724), and executes the absolute movement in a case where it is determined that "the counted number has reached the predetermined number" (S725).

According to the present example, the same operational effects as those of the third example and the fourth example described above can be exhibited.

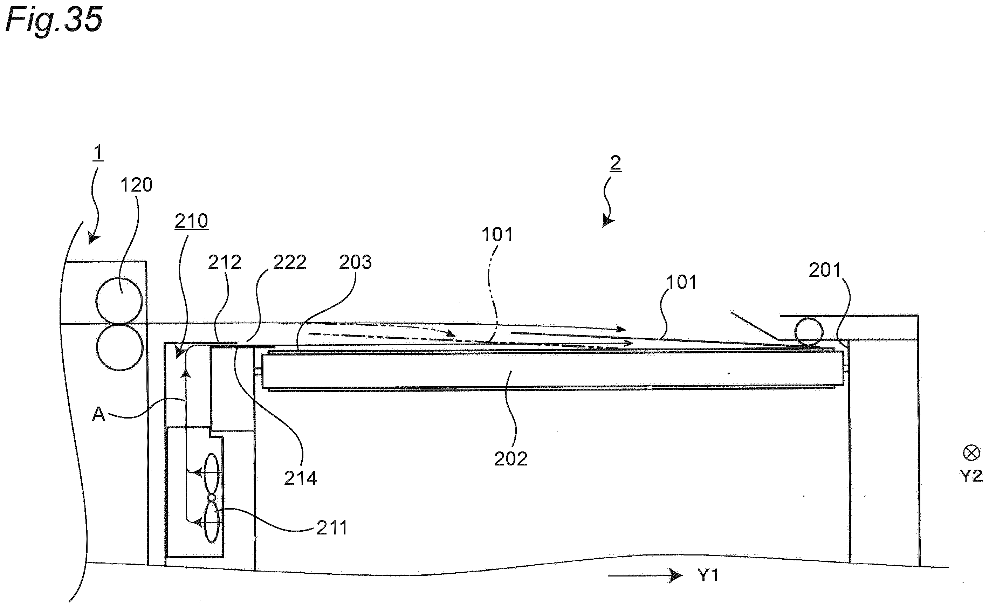

(7) It is preferable that the right angle transfer apparatus 2 used in the sheet process system 10 of the present invention includes a blower mechanism 210 for assisting the transfer. As illustrated in Fig. 35, the right angle transfer apparatus 2 places the sheet piece 101 fed from the first sheet process apparatus 1 in the transfer direction Y1 on a transfer belt 203 on a transfer roller 202, and transfers the sheet piece in the transfer direction Y2 orthogonal to the transfer direction Y1, and at that time, the leading end of the sheet piece 101 is brought into sliding contact with a transfer direction guide 201 extending along the transfer direction Y2.

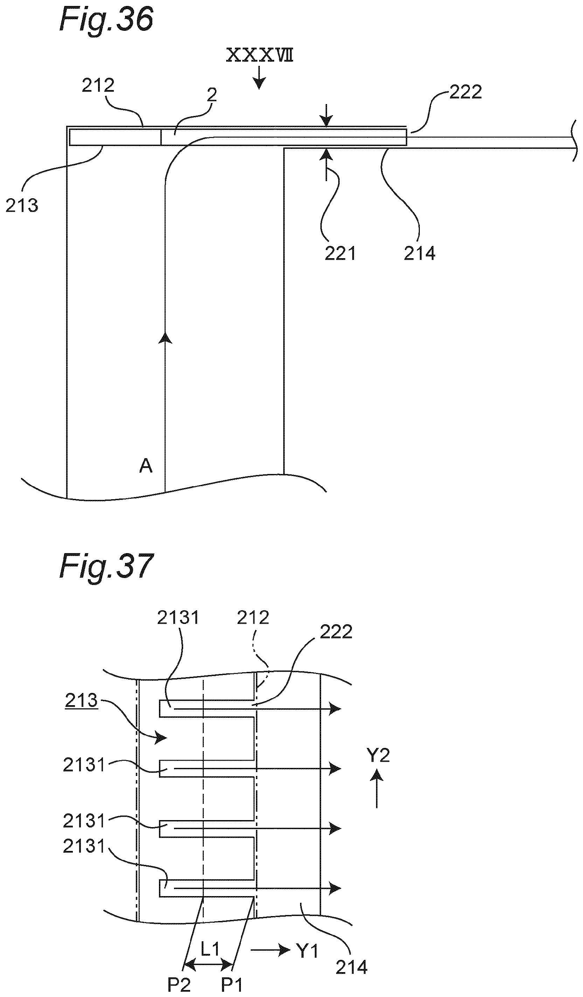

As illustrated in Fig. 35, the blower mechanism 210 blows air between the back surface of the sheet piece 101 fed from a transfer roller pair 120 of the first sheet process apparatus 1 and the upper surface of the transfer belt 203. Fig. 36 is an enlarged partial view of the blower mechanism 210 of Fig. 35. The blower mechanism 210 includes a blower fan 211, a blower upper guide plate 212, a straightening plate 213, and a blower lower guide plate 214. A gap 221 between the blower upper guide plate 212 and the blower lower guide plate 214 is open in a lateral direction, and the opening is an air blowing port 222. The straightening plate 213 is sandwiched between the blower upper guide plate 212 and the blower lower guide plate 214, and has a comb-like form in which a large number of notches 2131 are formed side by side as illustrated in Fig. 37 which is a perspective view seen from arrow XXXVII of Fig. 36. The notch 2131 is open in the lateral direction similarly to the gap 221. The opening position of the notch 2131 and the position of the air blowing port 222 are set at the same position in plan view. The entire length of the notch 2131 is set to be longer than a distance L1 from an opening position P1 to a position P2 of the proximal end edge of the blower lower guide plate 214. Therefore, the back portion of the notch 2131 is open downward.

In a case where the right angle transfer apparatus 2 does not include the blower mechanism 210, the following problems may occur. That is, in a case where the dimension of the sheet piece 101 fed from the first sheet process apparatus 1 in the transfer direction Y1 is small, the sheet piece 101 is transferred in the transfer direction Y2 by the transfer belt 203 before the leading end of the sheet piece 101 comes into contact with the transfer direction guide 201 or before the leading end of the sheet piece 101 sufficiently comes into contact with the transfer direction guide 201, and the position in the width direction of the sheet piece 101 transferred to the second sheet process apparatus 3 deviates, so that the machining in the second sheet process apparatus 3 becomes inaccurate. This is because the sheet piece 101 fed from the first sheet process apparatus 1 in the transfer direction Y1 comes out of the transfer roller pair 120 of the first sheet process apparatus 1 before reaching the transfer direction guide 201, loses the transfer force for reaching the transfer direction guide 201, and falls on the transfer belt 203. Such a sheet piece 101 is indicated by a two-dot chain line in Fig. 35.

However, in a case where the right angle transfer apparatus 2 includes the blower mechanism 210, the blower mechanism 210 is operated as follows, so that it is possible to prevent the occurrence of the above-described trouble. That is, when the first sheet process apparatus 1 is operated, the blower mechanism 210 of the right angle transfer apparatus 2 is also operated. In the blower mechanism 210, when the blower fan 211 is operated, the air is blown upward to rise as indicated by an arrow A, abuts against the blower upper guide plate 212 and the straightening plate 213 to deflect in the horizontal direction, passes through the notches 2131 of the straightening plate 213, and is blown out from the air blowing port 222 in the transfer direction Y1. Then, the blown air flows in the transfer direction Y1 between the back surface of the sheet piece 101 fed from the transfer roller pair 120 and the upper surface of the transfer belt 203. Therefore, the sheet piece 101 fed from the transfer roller pair 120 is floated and pushed out in the transfer direction Y1 by the air blowing. That is, the air blowing by the blower fan 211 can apply the transfer force in the transfer direction Y1, to the sheet piece 101 fed from the transfer roller pair 120, and thus can assist the transfer of the sheet piece 101.

Therefore, in a case where the right angle transfer apparatus 2 includes the blower mechanism 210, even in a case where the dimension of the sheet piece 101 fed from the first sheet process apparatus 1 in the transfer direction Y1 is small, the leading end of the sheet piece 101 can come into contact with the transfer direction guide 201, and as a result, it is possible to prevent the deviation of the position in the width direction of the sheet piece 101 transferred to the second sheet process apparatus 3.

It is preferable that the distance L1 of the notch 2131 is set to be long. In this case, the straightness of the air blown out from the air blowing port 222 along the transfer direction Y1 is enhanced, so that the air blown out from the air blowing port 222 can assist the transfer of the sheet piece 101 to a far place in the transfer direction Y1 without diffusing on the transfer belt 203. Incidentally, it has been confirmed that when the distance L1 is actually set to 20 mm, the air is sent to the transfer direction guide 201 at a distance of about 440 mm from the air blowing port 222.

### INDUSTRIAL APPLICABILITY

With the machining data generation apparatus of the present invention, since the user can easily create the machining data, it is possible to exhibit great industrial applicability.

### DESCRIPTION OF REFERENCE NUMERALS

- 1, 3, 9A-C: Sheet process apparatus
- 10: Sheet process system
- 100, 100A: Sheet
- 110, 110A-C: Product
- 4: Machining data generation apparatus
- 51: Machining condition input unit
- 52: Criterion input unit
- 53: Candidate selection unit
- 71: Data output unit
- 8: Data generation unit
- 81: Layout setting unit
- 811: Candidate creation unit
- 812: Candidate selection unit
- 813: Candidate display unit

## Claims

1. A sheet process system (10) comprising:
one sheet process apparatus (1; 3; 9A; 9B; 9C; 300); and
a machining data generation apparatus (4);
wherein the sheet process system (10) is configured to execute a plurality of times of processes by using the sheet process apparatus (1; 3; 9A; 9B; 9C; 300) processing a paper sheet (100; 100A) by performing one or more times of machining, and to obtain a product (110; 110A; 110B; 110C; 110D) in a desired form from the paper sheet,
wherein the machining data generation apparatus (4) is configured to generate machining data for operating the sheet process apparatus,
wherein the machining data generation apparatus (4) comprises:
a machining condition input unit (51) that is configured to input a machining condition for obtaining the product in a desired form from the paper sheet;
a data generation unit (8) that is configured to generate the machining data including each machining data piece for operating the sheet process apparatus in order to execute each process in the plurality of times of processes, on the basis of the input machining condition; and
a data output unit (71) that is configured to output the generated machining data to the sheet process apparatus that executes each process in the plurality of times of processes, wherein the data output unit (71) is configured to continuously output each machining data piece to the sheet process apparatus,
wherein the sheet process apparatus includes at least one machining device among the following machining devices:
i) a machining device (90, 91) arranged to form a crease at an arbitrary position of the paper sheet,
ii) a machining device (95, 96) arranged to form perforations at an arbitrary position of the paper sheet,
iii) a machining device (92, 93, 97, 98) arranged to cut the paper sheet at an arbitrary position of the paper sheet along the transfer direction (Y2), and
iv) a machining device (94, 99) arranged to cut the paper sheet at an arbitrary position of the paper sheet along a width direction (X2) orthogonal to the transfer direction (Y2).

2. A sheet process system (10) comprising:
two or more sheet process apparatuses (1; 3; 9A; 9B; 9C; 300); and
a machining data generation apparatus (4);
wherein the sheet process system (10) is configured to execute a plurality of times of processes by using the two or more sheet process apparatuses (1; 3; 9A; 9B; 9C; 300) processing a paper sheet (100; 100A) by performing one or more times of machining, and to obtain a product (110; 110A; 110B; 110C; 110D) in a desired form from the paper sheet,
wherein the machining data generation apparatus (4) is configured to generate machining data for operating the two or more sheet process apparatuses,
wherein the machining data generation apparatus (4) comprises:
a machining condition input unit (51) that is configured to input a machining condition for obtaining the product in a desired form from the paper sheet;
a data generation unit (8) that is configured to generate the machining data including each machining data piece for operating the two or more sheet process apparatuses in order to execute each process in the plurality of times of processes, on the basis of the input machining condition; and
a data output unit (71) that is configured to output the generated machining data to the two or more sheet process apparatuses that execute each process in the plurality of times of processes, wherein the data output unit (71) is configured to output each machining data piece to each of the two or more sheet process apparatuses,
wherein the sheet process system (10) includes a first sheet process apparatus (1), a right angle transfer apparatus (2), and a second sheet process apparatus (3).

3. The sheet process system (10) according to claim 2,
wherein the sheet process system (10) comprises three sheet process apparatuses (1; 3; 9A; 9B; 9C; 300), wherein the sheet process system (10) includes the first sheet process apparatus (1), the right angle transfer apparatus (2), and two second sheet process apparatuses (3).

4. The sheet process system (10) according to claim 2 or 3,
wherein the first sheet process apparatus (1) includes one machining device (11), and is arranged to machine the paper sheet (100) by the machining device (11) to feed the paper sheet in a transfer direction (Y1), wherein the paper sheet (100) is machined by the machining device (11) to be at least two sheet pieces (101), wherein the machining device (11) is arranged to cut the paper sheet (100) along a width direction (X1) orthogonal to the transfer direction (Y1),
wherein the right angle transfer apparatus (2) is arranged to transfer a sheet piece (101), which has been fed in the transfer direction (Y1) from the first sheet process apparatus (1), in a transfer direction (Y2) orthogonal to the transfer direction (Y1), and
wherein the second sheet process apparatus (3) includes:
i) a machining device (31, 32) arranged to form perforations at an arbitrary position of the paper sheet,
ii) a machining device (33, 34) arranged to cut the paper sheet at an arbitrary position of the paper sheet along the transfer direction (Y2), and
iii) a machining device (35) arranged to cut the paper sheet at an arbitrary position of the paper sheet along a width direction (X2) orthogonal to the transfer direction (Y2).

5. The sheet process system (10) according to any one of claims 1 to 4,
wherein the sheet process system (10) is configured to obtain a plurality of the products (110; 110A; 110B; 110C; 110D) from the paper sheet (100; 100A),
the data generation unit (8) includes a layout setting unit (81) that is configured to set an arrangement layout of the products in the paper sheet which is realizable by the plurality of times of processes, on the basis of a size of the paper sheet and a size of the product or on the basis of a size of the paper sheet, a size of the product, and a type of the machining, which are included in the input machining condition, and
the data generation unit (8) is configured to generate the machining data on the basis of the set arrangement layout.

6. The sheet process system (10) according to claim 5,
wherein the layout setting unit (81) includes
a candidate creation unit (811) that is configured to create a plurality of candidates for the arrangement layout, and
a candidate selection unit (812) that is configured to select a specific candidate from the plurality of created candidates on the basis of a predetermined criterion, and
the machining data generation apparatus (4) further includes a criterion input unit (52) that is configured to input the predetermined criterion.

7. The sheet process system (10) according to claim 5,
wherein the layout setting unit (81) includes
a candidate creation unit (811) that is configured to create a plurality of candidates for the arrangement layout, and
a candidate display unit (813) that is configured to display the plurality of created candidates, and
the machining data generation apparatus (4) further includes a candidate selection input unit (53) by which a user can select a desired candidate from among the plurality of displayed candidates.

8. The sheet process system (10) according to claim 6,
wherein the candidate creation unit (811) is configured to also create a candidate in which at least a part of the products is rotated by 90 degrees such that the number of impositions per paper sheet is increased or such that the number of times of machining per paper sheet along a direction orthogonal to the transfer direction of the paper sheet (100; 100A) is reduced.

9. The sheet process system (10) according to claim 6,
wherein the predetermined criterion is that the number of impositions per paper sheet is a maximum.

10. The sheet process system (10) according to claim 6,
wherein the predetermined criterion is that a process time per product is a minimum.

11. The sheet process system (10) according to claim 6 or 7,
wherein the candidate creation unit (811) is configured to create the arrangement layout that is realizable by the final-time process in the plurality of times of processes and then create the arrangement layout that is realizable by including the previous-time process, and
the data generation unit (8) is configured to generate the machining data indicating that the final process includes cutting machining of finish-cutting the paper sheet into the product.

12. The sheet process system (10) according to any one of the preceding claims,
wherein in a case where at least any one of following (a) and (b) is satisfied,
(a) in a case where, in the sheet process apparatus (1; 3; 9A; 9B; 9C; 300) that executes the N-th-time process, a size of the supplied paper sheet (100; 100A) is larger than a size of the dischargeable paper sheet,
(b) in a case where a size of the paper sheet supplied to the sheet process apparatus that executes the N-th-time process is larger than a size of the paper sheet suppliable to the sheet process apparatus that executes the N+1-th-time process,
the N-th-time process (N is an integer of 1 or more) in the plurality of times of processes includes cutting machining of cutting the paper sheet.

13. The sheet process system (10) according to any one of the preceding claims,
wherein the sheet process system (10) is configured to obtain one product (110; 110A; 110B; 110C; 110D) from the paper sheet.

14. The sheet process system according to any one of the preceding claims,
wherein at least one of the sheet process apparatuses (300) includes
a vertical machining device (301) that is configured to machine the paper sheet (100; 100A) along a transfer direction,
a movement mechanism (302) that is configured to move a vertical machining blade (3011) of the vertical machining device in a width direction orthogonal to the transfer direction, and
a movement control unit (303) that is configured to control the movement mechanism,
wherein the movement control unit is configured to control the movement mechanism such that in a case where the vertical machining blade of the vertical machining device is required to be moved in the width direction on the basis of the machining data piece of the machining data generated by the data generation unit (8) of the machining data generation apparatus (4), the vertical machining blade is directly moved from a position of the vertical machining blade in the width direction in the preceding vertical machining device to a position of the vertical machining blade in the width direction in the following vertical machining device.

## Patentansprüche

1. Bogenbearbeitungssystem (10), umfassend:
eine Bogenbearbeitungsvorrichtung (1; 3; 9A; 9B; 9C; 300); und
eine Mechanische-Bearbeitungsdatenerzeugungsvorrichtung (4);
wobei das Bogenbearbeitungssystem (10) ausgelegt ist, um Prozesse unter Verwendung der Bogenbearbeitungsvorrichtung (1; 3; 9A; 9B; 9C; 300), die einen Papierbogen (100; 100A) bearbeitet, eine Vielzahl von Malen auszuführen, indem eine ein- oder mehrmalige mechanische Bearbeitung durchgeführt wird, und um ein Produkt (110; 110A; 110B; 110C; 110D) in einer gewünschten Form des Papierbogens zu erhalten,
wobei die Mechanische-Bearbeitungsdatenerzeugungsvorrichtung (4) ausgelegt ist, um Mechanische-Bearbeitungsdaten zum Betreiben der Bogenbearbeitungsvorrichtung zu erzeugen,
wobei die Mechanische-Bearbeitungsdatenerzeugungsvorrichtung (4) Folgendes umfasst:
eine Mechanische-Bearbeitungsbedingungseingabeeinheit (51), die ausgelegt ist, um eine Mechanische-Bearbeitungsbedingung zum Erhalten des Produkts in einer gewünschten Form aus dem Papierbogen einzugeben;
eine Datenerzeugungseinheit (8), die ausgelegt ist, um die Mechanische-Bearbeitungsdaten, einschließlich jedes Mechanische-Bearbeitungsdatenelements zum Betreiben der Bogenbearbeitungsvorrichtung, zu erzeugen, um jeden Prozess in der Vielzahl von Malen von Prozessen basierend auf der eingegebenen Mechanische-Bearbeitungsbedingung auszuführen; und
eine Datenausgabeeinheit (71), die ausgelegt ist, um die erzeugten Mechanische-Bearbeitungsdaten an die Bogenbearbeitungsvorrichtung auszugeben, die jeden Prozess in der Vielzahl von Malen der Prozesse ausführt, wobei die Datenausgabeeinheit (71) ausgelegt ist, um jedes Bearbeitungsdatenelement kontinuierlich an die Bogenbearbeitungsvorrichtung auszugeben,
wobei die Bogenbearbeitungsvorrichtung zumindest eine Mechanische-Bearbeitungsvorrichtung aus den folgenden Mechanische-Bearbeitungsvorrichtungen umfasst:
i) eine Mechanische-Bearbeitungsvorrichtung (90, 91), die angeordnet ist, um eine Falte an einer beliebigen Position des Papierbogens zu bilden,
ii) eine Mechanische-Bearbeitungsvorrichtung (95, 96), die angeordnet ist, um Perforationen an einer beliebigen Position des Papierbogens zu bilden,
iii) eine Mechanische-Bearbeitungsvorrichtung (92, 93, 97, 98), die angeordnet ist, um den Papierbogen an einer beliebigen Position des Papierbogens entlang der Transportrichtung (Y2) zu schneiden und
iv) eine Mechanische-Bearbeitungsvorrichtung (94, 99), die angeordnet ist, um den Papierbogen an einer beliebigen Position des Papierbogens entlang einer Breitenrichtung (X2) orthogonal zu der Transportrichtung (Y2) zu schneiden.

2. Bogenbearbeitungssystem (10), umfassend:
zwei oder mehr Bogenbearbeitungsvorrichtungen (1; 3; 9A; 9B; 9C; 300); und
eine Mechanische-Bearbeitungsdatenerzeugungsvorrichtung (4);
wobei das Bogenbearbeitungssystem (10) ausgelegt ist, um Prozesse unter Verwendung der zwei oder mehr Bogenbearbeitungsvorrichtungen (1; 3; 9A; 9B; 9C; 300), die einen Papierbogen (100; 100A) bearbeiten, eine Vielzahl von Malen auszuführen, indem eine ein- oder mehrmalige mechanische Bearbeitung durchgeführt wird, und um ein Produkt (110; 110A; 110B; 110C; 110D) in einer gewünschten Form aus dem Papierbogen zu erhalten,
wobei die Mechanische-Bearbeitungsdatenerzeugungsvorrichtung (4) ausgelegt ist, um Mechanische-Bearbeitungsdaten zum Betreiben der zwei oder mehr Bogenbearbeitungsvorrichtungen zu erzeugen,
wobei die Mechanische-Bearbeitungsdatenerzeugungsvorrichtung (4) Folgendes umfasst:
eine Mechanische-Bearbeitungsbedingungseingabeeinheit (51), die ausgelegt ist, um eine Mechanische-Bearbeitungsbedingung zum Erhalten des Produkts in einer gewünschten Form aus dem Papierbogen einzugeben;
eine Datenerzeugungseinheit (8), die ausgelegt ist, um die Mechanische-Bearbeitungsdaten, einschließlich jedes Mechanische-Bearbeitungsdatenelements zum Betreiben der zwei oder mehr Bogenbearbeitungsvorrichtungen, zu erzeugen, um jeden Prozess in der Vielzahl von Malen von Prozessen basierend auf der eingegebenen Mechanische-Bearbeitungsbedingung auszuführen; und
eine Datenausgabeeinheit (71), die ausgelegt ist, um die erzeugten Mechanische-Bearbeitungsdaten an die zwei oder mehr Bogenbearbeitungsvorrichtungen auszugeben, die jeden Prozess in der Vielzahl von Malen der Prozesse ausführen, wobei die Datenausgabeeinheit (71) ausgelegt ist, um jedes Mechanische-Bearbeitungsdatenelement kontinuierlich an die zwei oder mehr Bogenbearbeitungsvorrichtungen auszugeben,
wobei das Bogenbearbeitungssystem (10) eine erste Bogenbearbeitungsvorrichtung (1), eine Rechter-Winkel-Transportvorrichtung (2) und eine zweite Bogenbearbeitungsvorrichtung (3) umfasst.

3. Bogenbearbeitungssystem (10) nach Anspruch 2,
wobei das Bogenbearbeitungssystem (10) drei Bogenbearbeitungsvorrichtungen (1; 3; 9A; 9B; 9C; 300) umfasst, wobei das Bogenbearbeitungssystem (10) die erste Bogenbearbeitungsvorrichtung (1), die Rechter-Winkel-Transportvorrichtung (2) und zwei zweite Bogenbearbeitungsvorrichtungen (3) umfasst.

4. Bogenbearbeitungssystem (10) nach Anspruch 2 oder 3,
wobei die erste Bogenbearbeitungsvorrichtung (1) eine Mechanische-Bearbeitungsvorrichtung (11) umfasst und angeordnet ist, um den Papierbogen (100) durch die Mechanische-Bearbeitungsvorrichtung (11) zu bearbeiten, um den Papierbogen in eine Transportrichtung (Y1) zuzuführen, wobei der Papierbogen (100) durch die Mechanische-Bearbeitungsvorrichtung (11) mechanisch bearbeitet wird, um in zumindest zwei Bogenstücken (101) vorzuliegen, wobei die Mechanische-Bearbeitungsvorrichtung (11) angeordnet ist, um den Papierbogen (100) entlang einer Breitenrichtung (X1) orthogonal zu der Transportrichtung (Y1) zu schneiden,
wobei die Rechter-Winkel-Transportvorrichtung (2) angeordnet ist, um ein Bogenstück (101), das in die Transportrichtung (Y1) von der ersten Bogenbearbeitungsvorrichtung (1) zugeführt wurde, in eine Transportrichtung (Y2) orthogonal zur Transportrichtung (Y1) zu bewegen, und
wobei die zweite Bogenbearbeitungsvorrichtung (3) Folgendes umfasst:
i) eine Mechanische-Bearbeitungsvorrichtung (31, 32), die angeordnet ist, um Perforationen an einer beliebigen Position des Papierbogens zu bilden,
ii) eine Mechanische-Bearbeitungsvorrichtung (33, 34), die angeordnet ist, um den Papierbogen an einer beliebigen Position des Papierbogens entlang der Transportrichtung (Y2) zu schneiden, und
iii) eine Mechanische-Bearbeitungsvorrichtung (35), die angeordnet ist, um den Papierbogen an einer beliebigen Position des Papierbogens entlang einer Breitenrichtung (X2) orthogonal zu der Transportrichtung (Y2) zu schneiden.

5. Bogenbearbeitungssystem (10) nach einem der Ansprüche 1 bis 4,
wobei das Bogenbearbeitungssystem (10) ausgelegt ist, um eine Vielzahl der Produkte (110; 110A; 110B; 110C; 110D) aus dem Papierbogen (100; 100A) zu erhalten,
wobei die Datenerzeugungseinheit (8) eine Layouteinstelleinheit (81) umfasst, die ausgelegt ist, um ein Anordnungslayout der Produkte in dem Papierbogen einzustellen, das durch die Vielzahl von Malen von Prozessen basierend auf einer Größe des Papierbogens und einer Größe des Produkts oder basierend auf einer Größe des Papierbogens, einer Größe des Produkts und eines Typs der mechanischen Bearbeitung umsetzbar ist, die in der Eingabebearbeitungsbedingung enthalten sind, und
wobei die Datenerzeugungseinheit (8) ausgelegt ist, um die Mechanische-Bearbeitungsdaten basierend auf dem eingestellten Anordnungslayout zu erzeugen.

6. Bogenbearbeitungssystem (10) nach Anspruch 5,
wobei die Layouteinstelleinheit (81) Folgendes umfasst:
eine Kandidatenerstellungseinheit (811), die ausgelegt ist, um eine Vielzahl von Kandidaten für das Anordnungslayout zu erstellen, und
eine Kandidatenauswahleinheit (812), die ausgelegt ist, um einen bestimmten Kandidaten aus der Vielzahl von erstellten Kandidaten basierend auf einem vorbestimmten Kriterium auszuwählen, und
wobei die Mechanische-Bearbeitungsdatenerzeugungseinheit (4) ferner eine Kriteriumeingabeeinheit (52) umfasst, die ausgelegt ist, um das vorbestimmte Kriterium einzugeben.

7. Bogenbearbeitungssystem (10) nach Anspruch 5,
wobei die Layouteinstelleinheit (81) Folgendes umfasst:
eine Kandidatenerstellungseinheit (811), die ausgelegt ist, um eine Vielzahl von Kandidaten für das Anordnungslayout zu erstellen, und
eine Kandidatenanzeigeeinheit (813), die ausgelegt ist, um die Vielzahl von erstellten Kandidaten anzuzeigen, und
wobei die Mechanische-Bearbeitungsdatenerzeugungseinheit (4) ferner eine Kandidatenauswahleingabeeinheit (53) umfasst, durch die ein Benutzer einen gewünschten Kandidaten aus der Vielzahl von angezeigten Kandidaten auswählen kann.

8. Bogenbearbeitungssystem (10) nach Anspruch 6,
wobei die Kandidatenerstellungseinheit (811) ausgelegt ist, um ebenfalls einen Kandidaten zu erstellen, in dem zumindest ein Teil der Produkte um 90° gedreht ist, sodass die Anzahl des Ausschießens pro Papierbogen erhöht wird oder so hoch ist, dass die Anzahl von Bearbeitungswiederholungen pro Papierbogen entlang einer Richtung orthogonal zur Transportrichtung des Papierbogens (100; 100A) reduziert ist.

9. Bogenbearbeitungssystem (10) nach Anspruch 6,
wobei das vorbestimmte Kriterium jenes ist, dass die Anzahl des Ausschießens pro Papierbogen ein Maximalwert ist.

10. Bogenbearbeitungssystem (10) nach Anspruch 6,
wobei das vorbestimmte Kriterium jenes ist, dass eine Bearbeitungszeit pro Produkt ein Minimalwert ist.

11. Bogenbearbeitungssystem (10) nach Anspruch 6 oder 7,
wobei die Kandidatenerstellungseinheit (811) ausgelegt ist, um das Anordnungslayout zu erstellen, das durch den letztmaligen Prozess in der Vielzahl von Malen von Prozessen umsetzbar ist, und um dann das Anordnungslayout zu erstellen, das durch Einschließen des vorangegangenen Prozesses umsetzbar ist, und
wobei die Datenerzeugungseinheit (8) ausgelegt ist, um die Bearbeitungsdaten zu erzeugen, die angeben, dass der letzte Prozess das Schneidbearbeiten des abschließenden Zuschneidens des Papierbogens in das Produkt umfasst.

12. Bogenbearbeitungssystem (10) nach einem der vorangegangenen Ansprüche, wobei in einem Fall, in dem zumindest einer der folgenden Punkte (a) und (b) erfüllt ist,
(a) in einem Fall, in dem in der Bogenbearbeitungsvorrichtung (1; 3; 9A; 9B; 9C; 300), die das N-te-Mal des Prozesses ausführt, eine Größe des zugeführten Papierbogens (100; 100A) größer ist als eine Größe des ausgebbaren Papierbogens,
(b) in einem Fall, in dem eine Größe des Papierbogens, der der Bogenbearbeitungsvorrichtung zugeführt wird, die das N-te-Mal des Prozesses ausführt, größer ist als eine Größe des Papierbogens, die zu der Bogenbearbeitungsvorrichtung zuführbar ist, die das N+1-te-Mal des Prozesses ausführt,
das N-te-Mal des Prozesses (N ist eine ganze Zahl von 1 oder mehr) in der Vielzahl von Malen von Prozessen das Schneidbearbeiten des Schneidens des Papierbogens umfasst.

13. Bogenbearbeitungssystem (10) nach einem der vorangegangenen Ansprüche, wobei das Bogenbearbeitungssystem (10) ausgelegt ist, um ein Produkt (110; 110A; 110B; 110C; 110D) aus dem Papierbogen zu erhalten.

14. Bogenbearbeitungssystem nach einem der vorangegangenen Ansprüche,
wobei zumindest eine der Bogenbearbeitungsvorrichtungen (300) Folgendes umfasst:
eine vertikale Mechanische-Bearbeitungsvorrichtung (301), die ausgelegt ist, um den Papierbogen (100; 100A) entlang einer Transportrichtung zu bearbeiten,
einen Bewegungsmechanismus (302), der ausgelegt ist, um eine vertikale Bearbeitungsklinge (3011) der vertikalen Mechanischen-Bearbeitungsvorrichtung in eine Breitenrichtung orthogonal zu der Transportrichtung zu bewegen, und
eine Bewegungssteuereinheit (303), die ausgelegt ist, um den Bewegungsmechanismus zu steuern,
wobei die Bewegungssteuereinheit ausgelegt ist, um den Bewegungsmechanismus so zu steuern, dass in einem Fall, in dem erforderlich ist, dass das vertikale Mechanische-Bearbeitungsmesser der vertikalen Mechanische-Bearbeitungsvorrichtung basierend auf dem Mechanische-Bearbeitungsdatenelement der Bearbeitungsdaten, die durch die Datenerzeugungseinheit (8) der Mechanische-Bearbeitungsdatenerzeugungsvorrichtung (4) erzeugt wurden, in die Breitenrichtung bewegt wird, das vertikale Mechanische-Bearbeitungsmesser aus einer Position des vertikalen Mechanischen-Bearbeitungsmessers direkt in die Breitenrichtung in der vorangegangenen vertikalen Mechanischen-Bearbeitungsvorrichtung in eine Position des vertikalen Mechanischen-Bearbeitungsmessers in die Breitenrichtung in der nachfolgenden vertikalen Mechanischen-Bearbeitungsvorrichtung bewegt wird.

## Revendications

1. Système de traitement de feuilles (10) comprenant:
un dispositif de traitement de feuilles (1 ; 3 ; 9A ; 9B ; 9C ; 300) ; et
un dispositif de génération de données d'usinage (4) ;
dans lequel le système de traitement de feuilles (10) est configuré pour exécuter une pluralité de fois des processus en utilisant le dispositif de traitement de feuilles (1 ; 3 ; 9A ; 9B ; 9C ; 300), en traitant une feuille de papier (100 ; 100A) par l'exécution d'une ou plusieurs opérations d'usinage, et pour obtenir un produit (110 ; 110A ; 110B ; 110C ; 110D) sous une forme souhaitée à partir de la feuille de papier,
dans lequel le dispositif de génération de données d'usinage (4) est configuré pour générer des données d'usinage destinées à faire fonctionner le dispositif de traitement de feuilles,
dans lequel le dispositif de génération de données d'usinage (4) comprend :
une unité de saisie de condition d'usinage (51) configurée pour saisir une condition d'usinage permettant d'obtenir le produit sous une forme souhaitée à partir de la feuille de papier ;
une unité de génération de données (8) configurée pour générer les données d'usinage comportant chaque élément de données d'usinage destiné à faire fonctionner le dispositif de traitement de feuilles afin d'exécuter chaque processus dans le cadre des multiples processus, sur la base de la condition d'usinage saisie ; et
une unité de sortie de données (71) configurée pour sortir les données d'usinage générées vers le dispositif de traitement de feuilles qui exécute chaque processus dans le cadre des multiples processus, dans lequel l'unité de sortie de données (71) est configurée pour sortir en continu chaque élément de données d'usinage vers le dispositif de traitement de feuilles,
dans lequel le dispositif de traitement de feuilles comporte au moins un dispositif d'usinage parmi les dispositifs d'usinage suivants :
i) un dispositif d'usinage (90, 91) agencé pour former un pli à une position arbitraire de la feuille de papier,
ii) un dispositif d'usinage (95, 96) agencé pour former des perforations à une position arbitraire de la feuille de papier,
iii) un dispositif d'usinage (92, 93, 97, 98) agencé pour découper la feuille de papier à une position arbitraire de la feuille de papier selon la direction de transfert (Y2), et
iv) un dispositif d'usinage (94, 99) agencé pour découper la feuille de papier à une position arbitraire de la feuille de papier selon une direction de largeur (X2) orthogonale à la direction de transfert (Y2).

2. Système de traitement de feuilles (10) comprenant:
deux ou plusieurs dispositifs de traitement de feuilles (1 ; 3 ; 9A ; 9B ; 9C ; 300) ; et
un dispositif de génération de données d'usinage (4) ;
dans lequel le système de traitement de feuilles (10) est configuré pour exécuter une pluralité de fois des processus en utilisant les deux ou plusieurs dispositifs de traitement de feuilles (1 ; 3 ; 9A ; 9B ; 9C ; 300), en traitant une feuille de papier (100 ; 100A) par l'exécution d'une ou plusieurs opérations d'usinage, et pour obtenir un produit (110 ; 110A ; 110B ; 110C ; 110D) sous une forme souhaitée à partir de la feuille de papier,
dans lequel le dispositif de génération de données d'usinage (4) est configuré pour générer des données d'usinage destinées à faire fonctionner les deux ou plusieurs dispositifs de traitement de feuilles,
dans lequel le dispositif de génération de données d'usinage (4) comprend :
une unité de saisie de condition d'usinage (51) configurée pour saisir une condition d'usinage permettant d'obtenir le produit sous une forme souhaitée à partir de la feuille de papier ;
une unité de génération de données (8) configurée pour générer les données d'usinage incluant chaque élément de données d'usinage destiné à faire fonctionner les deux ou plusieurs dispositifs de traitement de feuilles afin d'exécuter chaque processus de la pluralité de fois de processus, sur la base de la condition d'usinage saisie ; et
une unité de sortie de données (71) configurée pour sortir les données d'usinage générées vers
les deux ou plusieurs dispositifs de traitement de feuilles qui exécutent chaque processus dans le cadre des multiples processus, dans lequel l'unité de sortie de données (71) est configurée pour sortir chaque élément de données d'usinage vers chacun des deux ou plusieurs dispositifs de traitement de feuilles,
dans lequel le système de traitement de feuilles (10) comporte un premier dispositif de traitement de feuilles (1), un dispositif de transfert à angle droit (2), et un deuxième dispositif de traitement de feuilles (3).

3. Système de traitement de feuilles (10) selon la revendication 2,
dans lequel le système de traitement de feuilles (10) comprend trois dispositifs de traitement de feuilles (1 ; 3 ; 9A ; 9B ; 9C ; 300), dans lequel le système de traitement de feuilles (10) comporte le premier dispositif de traitement de feuilles (1), le dispositif de transfert à angle droit (2), et deux deuxièmes dispositifs de traitement de feuilles (3).

4. Système de traitement de feuilles (10) selon la revendication 2 ou 3,
dans lequel le premier dispositif de traitement de feuilles (1) comporte un dispositif d'usinage (11), et est agencé pour usiner la feuille de papier (100) par le dispositif d'usinage (11) afin d'alimenter la feuille de papier dans une direction de transfert (Y1), dans lequel la feuille de papier (100) est usinée par le dispositif d'usinage (11) de sorte à former au moins deux morceaux de feuille (101), dans lequel le dispositif d'usinage (11) est agencé pour découper la feuille de papier (100) selon une direction de largeur (X1) orthogonale à la direction de transfert (Y1),
dans lequel le dispositif de transfert à angle droit (2) est agencé pour transférer un morceau de feuille (101), qui a été alimenté dans la direction de transfert (Y1) depuis le premier dispositif de traitement de feuilles (1), dans une direction de transfert (Y2) orthogonale à la direction de transfert (Y1), et
dans lequel le deuxième dispositif de traitement de feuilles (3) comporte :
i) un dispositif d'usinage (31, 32) agencé pour former des perforations à une position arbitraire de la feuille de papier,
ii) un dispositif d'usinage (33, 34) agencé pour découper la feuille de papier à une position arbitraire de la feuille de papier selon la direction de transfert (Y2), et
iii) un dispositif d'usinage (35) agencé pour découper la feuille de papier à une position arbitraire de la feuille de papier selon une direction de largeur (X2) orthogonale à la direction de transfert (Y2).

5. Système de traitement de feuilles (10) selon l'une quelconque des revendications 1 à 4,
dans lequel le système de traitement de feuilles (10) est configuré pour obtenir une pluralité de produits (110 ; 110A ; 110B ; 110C ; 110D) à partir de la feuille de papier (100 ; 100A),
l'unité de génération de données (8) comporte une unité de réglage de mise en page (81) configurée pour définir une mise en page d'agencement des produits dans la feuille de papier, réalisable dans le cadre des multiples processus, sur la base d'une taille de la feuille de papier et d'une taille du produit, ou sur la base d'une taille de la feuille de papier, d'une taille du produit et d'un type d'usinage, qui sont compris dans la condition d'usinage saisie, et
l'unité de génération de données (8) est configurée pour générer les données d'usinage sur la base de la mise en page d'agencement définie.

6. Système de traitement de feuilles (10) selon la revendication 5,
dans lequel l'unité de réglage de mise en page (81) comporte
une unité de création de candidats (811) configurée pour créer une pluralité de candidats pour la mise en page d'agencement, et
une unité de sélection de candidats (812) configurée pour sélectionner un candidat spécifique parmi la pluralité de candidats créés sur la base d'un critère prédéterminé, et
le dispositif de génération de données d'usinage (4) comporte en outre une unité de saisie de critère (52) configurée pour saisir le critère prédéterminé.

7. Système de traitement de feuilles (10) selon la revendication 5,
dans lequel l'unité de réglage de mise en page (81) comporte
une unité de création de candidats (811) configurée pour créer une pluralité de candidats pour la mise en page d'agencement, et
une unité d'affichage de candidats (813) configurée pour afficher la pluralité de candidats créés, et
le dispositif de génération de données d'usinage (4) comporte en outre une unité de saisie de sélection de candidats (53) par laquelle un utilisateur peut sélectionner un candidat souhaité parmi la pluralité de candidats affichés.

8. Système de traitement de feuilles (10) selon la revendication 6,
dans lequel l'unité de création de candidats (811) est configurée pour créer également un candidat dans lequel au moins une partie des produits est tournée à 90 degrés de sorte que le nombre d'impositions par feuille de papier soit augmenté ou de sorte que le nombre d'usinages par feuille de papier selon une direction orthogonale à la direction de transfert de la feuille de papier (100 ; 100A) soit réduit.

9. Système de traitement de feuilles (10) selon la revendication 6,
dans lequel le critère prédéterminé est que le nombre d'impositions par feuille de papier est maximal.

10. Système de traitement de feuilles (10) selon la revendication 6,
dans lequel le critère prédéterminé est qu'un temps de processus par produit est minimal.

11. Système de traitement de feuilles (10) selon la revendication 6 ou 7,
dans lequel l'unité de création de candidats (811) est configurée pour créer la mise en page d'agencement réalisable par le processus final dans le cadre des multiples processus, puis créer la mise en page d'agencement réalisable en incluant le processus de la fois précédente, et
l'unité de génération de données (8) est configurée pour générer les données d'usinage indiquant que le processus final comporte un usinage de découpe consistant à découper définitivement la feuille de papier en produit.

12. Système de traitement de feuilles (10) selon l'une quelconque des revendications précédentes, dans le cas où au moins l'un quelconque des éléments suivants (a) et (b) est satisfait,
(a) dans le cas où, dans le dispositif de traitement de feuilles (1 ; 3 ; 9A ; 9B ; 9C ; 300) qui exécute le processus de la N-ième fois, une taille de la feuille de papier fournie (100 ; 100A) est supérieure à une taille de la feuille de papier pouvant être évacuée,
(b) dans le cas où une taille de la feuille de papier fournie au dispositif de traitement de feuilles qui exécute le processus de la N-ième fois est supérieure à une taille de la feuille de papier pouvant être fournie au dispositif de traitement de feuilles qui exécute le processus de la (N+1)-ième fois,
le processus de la N-ième fois (N est un entier supérieur ou égal à 1) dans la pluralité de processus comporte un usinage de découpe consistant à découper la feuille de papier.

13. Système de traitement de feuilles (10) selon l'une quelconque des revendications précédentes, dans lequel le système de traitement de feuilles (10) est configuré pour obtenir un produit (110 ; 110A ;110B ;110C ; 110D) à partir de la feuille de papier.

14. Système de traitement de feuilles selon l'une quelconque des revendications précédentes,
dans lequel au moins un des dispositifs de traitement de feuilles (300) comporte
un dispositif d'usinage vertical (301) configuré pour usiner la feuille de papier (100 ; 100A) selon une direction de transfert,
un mécanisme de déplacement (302) configuré pour déplacer une lame d'usinage verticale (3011) du dispositif d'usinage vertical selon une direction de largeur orthogonale à la direction de transfert, et
une unité de commande de déplacement (303) configurée pour commander le mécanisme de déplacement,
dans lequel l'unité de commande de déplacement est configurée pour commander le mécanisme de déplacement de sorte que, dans le cas où la lame d'usinage verticale du dispositif d'usinage vertical doit être déplacée dans la direction de la largeur sur la base de l'élément de données d'usinage des données d'usinage générées par l'unité de génération de données (8) du dispositif de génération de données d'usinage (4), la lame d'usinage verticale soit déplacée directement depuis une position de la lame d'usinage verticale dans la direction de la largeur dans le dispositif d'usinage vertical précédent vers une position de la lame d'usinage verticale dans la direction de la largeur dans le dispositif d'usinage vertical suivant.
